# EUROPÄISCHE PATENTSCHRIFT

(11) **EP 1 900 173 B1**
(45) Veröffentlichungstag und Bekanntmachung des Hinweises auf die Patenterteilung: **08.08.2012**
(21) Anmeldenummer: 06763619.1
(22) Anmeldetag: 09.06.2006
(51) Int. Cl.: H04M 7/00, H04L 29/06

(54) **Verfahren, Server-Einrichtung und Umsetzeinrichtung zum aufbauen einer Nutzdatenverbindung**
Method, server device and a converting device for setting up a user data connection
Procédé, dispositif serveur et dispositif de conversion pour l'etablissement d'une liaison de données utiles

(30) Priorität: 04.07.2005 DE 102005031167
(43) Veröffentlichungstag der Anmeldung: 19.03.2008
(73) Patentinhaber: Siemens Enterprise Communications GmbH & Co. KG, 81379 München (DE)
(72) Erfinder: KENNEDY, Stephan, 86949 Windach (DE)
(74) Vertreter: Fritzsche, Thomas
(86) Internationale Anmeldenummer: PCT/EP2006/063051
(87) Internationale Veröffentlichungsnummer: WO 2007/003483

(56) Entgegenhaltungen:
- WO-A-2004/075582
- WO-A-2004/082254
- US-A1- 2003 219 006
- US-A1- 2004 240 399
- US-B1- 6 600 738

## Beschreibung

Bei zeitgemäßen Kommunikationssystemen ist bekannt, Nutzdaten, z.B. zur Sprach-, Video- oder Multimediakommunikation über paketorientierte Netzwerke zu übermitteln. Durch die Verwendung paketorientierter Datenübertragungsverfahren ergeben sich häufig Einbußen in der Qualität der zu übertragenden Nutzdaten, welche häufig durch Konvertierungen und Verzögerungen von Nutzdatenpaketen in Netzwerkknoten bedingt sind.

In Anlehnung an das häufig zum Einsatz kommende so genannte Internet Protocol, abkürzend auch mit IP bezeichnet, wird im folgenden auf Kommunikationsendgeräte, welche auf Basis einer paketorientierten Übertragungstechnik arbeiten, auch mit dem Begriff "IP-Endeinrichtung" Bezug genommen. Bei der paketorientierten Übertragung von Nutzdaten sind auch die Begriffe "Voice over IP", abkürzend VoIP, und "Multimedia over IP", MoIP, geläufig.

Eine Verbindung zwischen IP-Endeinrichtungen wird im paketorientierten Netzwerk üblicherweise über Netzelemente wie Router, Switches oder Gateways geleitet. Dabei wird häufig zwischen Signalisierungsverbindungen und Nutzdatenverbindungen unterschieden. Router vermitteln hierbei üblicherweise Daten zwischen paketorientierten Netzwerken, während durch Gateways unterschiedliche Netzwerke gekoppelt werden.

Die Netzelemente und IP-Endeinrichtungen können Funktionen zum Kodieren - auch Enkodieren genannt - und Dekodieren der Nutzdaten mittels so genannter Codecs (Codec: coding and decoding) umfassen. Dabei umfassen ein Netzelement oder eine IP-Endeinrichtung häufig jeweils mehrere Codecs, insbesondere für unterschiedliche Arten von Nutzdaten, für unterschiedliche Bandbreiten und für unterschiedliche Qualität der Nutzdaten nach dem Dekodieren.

Nutzdaten, so genannte Payload, sind z.B. Sprach/Ton-, Video- oder Multimedia-Daten. Häufig verwendete Codecs für Sprachkodierung sind z.B. der nicht komprimierende G.711-Codec oder der komprimierende G.729-Codec der ITU (International Telecommunications Union). Codecs für Videokodierung sind z.B. der MPEG-1-Video- oder MPEG-2-Video-Codec des MPEG-Kommitees (MPEG: Motion Picture Experts Group).

Ein Kommunikationssystem ist häufig durch eine Strukturierung in einzelne Subnetzwerke gekennzeichnet, wobei die Subnetzwerke häufig über Gateways miteinander gekoppelt sind. Dabei können Nutz- oder Signalisierungsdaten zwischen einer IP-Endeinrichtung und einem Gateway, sowie zwischen jeweils zwei Gateways übermittelt werden, wobei für jede dieser Teilverbindungen - z.B. eine erste Teilverbindung von einer ersten IP-Endeinrichtung zu einem Gateway und eine zweite Teilverbindung von diesem Gateway zu einer zweiten IP-Endeinrichtung - ein spezifisches Übertragungsverfahren ausgewählt werden kann. Diese Auswahl basiert insbesondere auf den in den jeweiligen IP-Endeinrichtungen und Gateways zur Verfügung stehenden Codecs und den vorgesehenen Übertragungsprotokollen.

Bei einer Verbindung zwischen zwei IP-Endeinrichtungen können die Nutzdaten über mehrere Gateways geleitet werden, insbesondere sofern sich die Kommunikationsverbindung über mehrere Subnetzwerke erstreckt. Üblicherweise werden in jedem Gateway eingehende Nutzdaten durch einen so genannten Jitter-Buffer gepuffert, mit einem für eine eingehende Teilverbindung ausgewählten Codec dekodiert und zur Weiterleitung der Nutzdaten mit einem weiteren, für eine weitere Teilverbindung ausgewählten Codec kodiert. Dies kann zu einer Verzögerung der Nutzdaten insbesondere durch die Pufferung führen. Weiterhin kann es durch die Kodierung und die Dekodierung zu einer Verschlechterung der Qualität der Nutzdaten kommen, insbesondere wenn komprimierende Codecs verwendet werden und somit bei jedem Umsetzen, d.h. Kodieren oder Dekodieren, Nutzdaten-Informationen verloren gehen können.

Weiterhin ist in vielen Fällen eine mehrmalige Konvertierung in ein vom jeweiligen Subnetzwerk unterstützte Übertragungsverfahren oder -protokoll notwendig, insbesondere wenn die IP-Endeinrichtungen und die Gateways nicht dasselbe Kodierverfahren unterstützen. Das kann zu einer Verschlechterung der Verbindungsqualität durch mehrmaliges De- und Enkodieren, durch Datenkompression in den Teilverbindungen und durch Verwendung von einem, der zur Verfügung stehenden Bandbreite nicht angepassten Codec führen.

Bei einem üblichen Verbindungsaufbau zwischen zwei über einen Gateway gekoppelte IP-Endeinrichtungen, werden für Teilverbindungen von der ersten IP-Endeinrichtung zum Gateway und vom Gateway zu der zweiten IP-Endeinrichtung über Signalisierungs- und/oder Quittungsmeldungen insbesondere ein Kodierverfahren der Kommunikationspartner für die jeweiligen Teilverbindungen ausgetauscht und ausgehandelt. Bei Verbindungsannahme durch die gerufene, zweite IP-Endeinrichtung werden die Nutzdaten über die erste und die zweite Teilverbindung zwischen den jeweiligen Kommunikationspartnern dieser Teilverbindungen mit dem ausgehandelten Kodierverfahren der jeweiligen Teilverbindungen übermittelt, wobei im Gateway eine Pufferung sowie ein De- und Enkodieren der Nutzdaten mit dem jeweiligen Kodierverfahren der Teilverbindungen durchgeführt wird.

Die IP-Endeinrichtungen und/oder die Gateways als Kommunikationspartner einer Teilverbindung müssen bei bekannten Verfahren zur Übertragung von Nutzdaten die gleichen oder kompatible Codecs zum Kodieren und Dekodieren auswählen, damit der empfangende Kommunikationspartner die empfangenen, kodierten Daten Dekodieren kann. Kompatible Codecs bedeutet hierbei, dass kodierte Nutzdaten des Kommunikationspartners - evtl. mit Qualitätsverlust - dekodiert werden können.

Zur Verbesserung zumindest einiger der genannten Nachteile können IP-Endeinrichtungen, die die ITU-T-Empfehlung H. 323 (ITU-T: International Telecommunication Union - Telecommunications Standardization Sector) und die so genannte Direct Media Connection (DMC) unterstützen, Kommunikationsnutzdaten direkt zwischen den IP-Endeinrichtungen unter Umgehung der Gateways übermitteln und damit zusätzliche Konvertierungen und Verzögerungen vermeiden. Dies ist aber lediglich möglich, falls beide IP-Endeinrichtungen dasselbe Kodierverfahren unterstützen.

Aus der WO 2004/082254 A1 ist offenbart eine Netzwerkanordnung und Transcodierserver für Kommunikationsnetze.

Es ist Aufgabe der vorliegenden Erfindung ein flexibleres Verfahren zum Aufbauen einer Nutzdatenverbindung zwischen Kommunikationseinrichtungen anzugeben, bei dem es insbesondere nicht erforderlich ist, dass die Kommunikationseinrichtungen gegenseitig kompatible Kodierverfahren unterstützen. Es ist weiterhin Aufgabe der Erfindung eine Server-Einxichtung und eine Umsetzeinrichtung zur Durchführung des Verfahrens anzugeben.

Gelöst wird diese Aufgabe durch ein verfahren zum Übertragen von Nutzdaten von einer Ursprungs-Kömmunikationseinrichtung mit einem ersten Kodierer zum Kodieren der Nutzdaten zu einer Ziel-Kommunikationseinrichtung mit einem ersten Dekodierer zum Dekodieren der Nutzdaten, wobei die Übertragung über ein Kommunikationsnetz mit mehreren Umsetzeinrichtungen erfolgt, die weitere Kodierer und Dekodierer aufweisen, nach Patentanspruch 1, einer Server-Einrichtung nach Patentanspruch 11 zur Steuerung des Verfahrens nach Patentanspruch 1, sowie einer entsprechend ausgebildeten Umsetzeinrichtung nach Patentanspruch 12. Vorteilhafte Ausführungsformen und Weiterbildungen der Erfindung sind in den abhängigen Ansprüchen angegeben.

Bei dem erfindungsgemäßen verfahren wird, zum Übertragen von Nutzdaten von einer Ursprungs-Kommunikationseinrichtung mit einem ersten Kodierer zum Kodieren der Nutzdaten zu einer Ziel-Kommunikationseinrichtung mit einem ersten Dekodierer zum Dekodieren der Nutzdaten, wobei die Übertragung über ein Kommunikationsnetz mit mehreren Umsetzeinrichtungen, die weitere Kodierer und Dekodierer aufweisen, erfolgt, für die Umsetzeinrichtungen jeweils geprüft, ob der erste Kodierer mit einem Dekodierer einer jeweiligen Umsetzeinrichtung und der erste Dekodierer mit einem Kodierer dieser jeweiligen Umsetzeinrichtung kompatibel ist. Die Kommunikationseinrichtungen können z.B. als IP-Endgeräte, IP-Telefone und Multimediaapplikationen aber auch Gateways und Router realisiert sein. Bei den Umsetzeinrichtungen kann es sich insbesondere um Netzübergangseinrichtungen wie Gateways, Verbindungssteuerungen wie Gatekeeper und Netzelemente wie Router handeln. Ein Kodierer kann vorzugsweise ein Kodier-Anteil eines Codecs und ein Dekodierer ein Dekodier-Anteil eines Codecs sein.

Ein Kodierer und ein Dekodierer werden als zueinander kompatibel bezeichnet, wenn ein durch den Kodierer kodierter Datenstrom - evtl. mit Qualitätsverlusten - vom Dekodierer dekodiert werden kann. Ein Kodierer oder Dekodierer kann darüber hinaus einen Codec und zusätzlich Parameter zur Konfiguration des Codecs umfassen.

Bei einer Umsetzeinrichtung wird Kompatibilität insbesondere dann festgestellt, wenn der erste Kodierer mit einem der Dekodierer einer Umsetzeinrichtung sowie einer der Kodierer dieser Umsetzeinrichtung mit dem ersten Dekodierer kompatibel ist.

Weiterhin wird im erfindungsgemäßen Verfahren zur Übertragung der Nutzdaten eine derjenigen, als kompatibel befundenen Umsetzeinrichtungen, bei denen die Prüfung Kompatibilität feststellt, aus den Umsetzeinrichtungen ausgewählt, wobei die ausgewählte Umsetzeinrichtung die mit dem ersten Kodierer kodierten Nutzdaten mit dem kompatiblen Dekodierer der ausgewählten Umsetzeinrichtung dekodiert und die mit dem ersten Dekodierer dekodierbaren Nutzdaten mit dem kompatiblen Kodierer der ausgewählten Umsetzeinrichtung kodiert.

Das erfindungsgemäße Verfahren ist insofern vorteilhaft, als dass, sofern die Prüfung Kompatibilität feststellt, eine Nutzdatenverbindung von der Ursprungs-Kommunikationseinrichtung zur Ziel-Kommunikationseinrichtung über eine einzige Umsetzeinrichtung aufgebaut werden kann und sich somit lediglich geringe Qualitätsverluste in der Nutzdatenqualität ergeben. Vorteilhafterweise kann das Verfahren dann eingesetzt werden, wenn eine direkte Nutzdatenverbindung insbesondere aufgrund inkompatibler Kodierer und Dekodierer zwischen der Ursprungs-Kommunikationseinrichtung und der Ziel-Kommunikationseinrichtung nicht möglich ist oder dies nur mit einem, einer zur Verfügung stehenden Bandbreite nicht angepassten Kodierer und Dekodierer möglich ist.

Das erfindungsgemäße Verfahren kann dabei insbesondere zentral in einer Server-Einrichtung, in einer Umsetzeinrichtung oder dezentral in mehreren Umsetzeinrichtungen ablaufen.

Die erfindungsgemäße Server-Einrichtung zur Steuerung des erfindungsgemäßen Verfahrens umfasst eine Prüfeinheit, eine Umsetzeinrichtung-Auswahleinheit und eine Kodierer/Dekodierer-Auswahleinheit. Die Prüfeinheit dient dabei zum Prüfen auf Kompatibilität des ersten Kodierers mit einem Dekodierer einer jeweiligen der Umsetzeinrichtungen und des ersten Dekodierers mit einem Kodierer dieser jeweiligen Umsetzeinrichtung. Durch die Umsetzeinrichtung-Auswahleinheit wird aus den Umsetzeinrichtungen einer derjenigen Umsetzeinrichtungen zur Übertragung der Nutzdaten ausgewählt, bei denen die Prüfung Kompatibilität feststellt. Weiterhin ist in der erfindungsgemäßen Server-Einrichtung die Kodierer/Dekodierer-Auswahleinheit zum Auswählen eines mit dem ersten Kodierer kompatiblen Dekodierers und eines mit dem ersten Dekodierer kompatiblen Kodierers der ausgewählten Umsetzeinrichtung für die Dekodierung der mit dem ersten Kodierer kodierten Nutzdaten und für die Kodierung der mit dem ersten Dekodierer dekodierbaren Nutzdaten vorgesehen.

Die erfindungsgemäße Umsetzeinrichtung zum Übertragen von Nutzdaten von der Ursprungs-Kommunikationseinrichtung zur Ziel-Kommunikationseinrichtung umfasst eine Kodier/Dekodier-Ermittlungseinheit zum Erfassen einer den ersten Kodierer spezifizierenden Kodierungsangabe und einer den ersten Dekodierer spezifizierenden Dekodierungsangabe. Diese Kodierungs- und/oder Dekodierungsangabe kann dabei z.B. aus einem Signalisierungsmeldungsverkehr, aus einer Konfiguration der Umsetzeinrichtung und/oder aus einer Registrierung der Kommunikationseinrichtungen bei der Umsetzeinrichtung ermittelt werden. Weiterhin umfasst die erfindungsgemäße Umsetzeinrichtung eine Empfangseinheit zum Empfangen einer Initiierungsmeldung von einer weiteren Umsetzeinrichtung und/oder zum Empfangen einer Signalisierungsmeldung, z.B. einer Verbindungsaufbaumeldung, von der Ursprungs-Kommunikationseinrichtung und zum Ansteuern einer Prüfeinrichtung bei Empfang der Initiierungsmeldung und/oder der Signalisierungsmeldung. Die erfindungsgemäße Umsetzeinrichtung weist weiterhin eine Sendeeinheit zum Absenden einer Initiierungsmeldung an eine weitere Umsetzeinrichtung, insbesondere bei einem negativen Prüfergebnis der Prüfeinrichtung, auf. Weiterhin verfügt die Umsetzeinrichtung über eine Prüfeinrichtung zum Prüfen, ob der erste Kodierer mit einem Dekodierer der Umsetzeinrichtung und der erste Dekodierer mit einem Kodierer der Umsetzeinrichtung kompatibel ist, anhand der erfassten Kodierungs- und Dekodierungsangabe. Ferner umfasst die erfindungsgemäße Umsetzeinrichtung eine Übertragungseinheit zum Übertragen der Nutzdaten von der Ursprung- zu der Ziel-Kommunikationseinrichtung bei positivem Prüfergebnis, wobei in der Übertragungseinheit die mit dem ersten Kodierer kodierten Nutzdaten mit einem kompatiblen Dekodierer der Umsetzeinrichtung dekodiert und die mit dem ersten Dekodierer dekodierbaren Nutzdaten mit einem kompatiblen Kodierer der Umsetzeinrichtung kodiert werden.

Vorzugsweise können die Nutzdaten von der Ursprungs-Kommunikationseinrichtung zur Umsetzeinrichtung direkt übertragen werden, ohne dass sich weitere Umsetzeinrichtungen im Übertragungspfad der Nutzdaten befinden. Gleiches gilt für die Übertragung von der Umsetzeinrichtung zur Zielkommunikationseinrichtung. Somit können Qualitätsverluste aufgrund mehrfacher Konvertierungen der Nutzdaten vermieden werden.

In einer vorteilhaften Weiterbildung des erfindungsgemäßen Verfahrens können eine oder mehrere der nicht ausgewählten Umsetzeinrichtungen, die sich im Signalisierungspfad zwischen der Ursprung- und der Ziel-Kommunikationseinrichtung befinden, bei der Übermittlung der Nutzdaten umgangen werden. Somit können Qualitätsverluste der Nutzdaten durch mehrmaliges Kodieren und Dekodieren oder aufgrund von Verzögerungen bedingt durch mehrmaliges Puffern der Nutzdaten in Jitter-Buffern verhindert werden. Dies gilt insbesondere, wenn die Nutzdaten ausschließlich über die ausgewählte Umsetzeinrichtung unter Umgehung der nicht ausgewählten Umsetzeinrichtungen übermittelt werden und somit lediglich eine einzige Umsetzeinrichtung an der Übermittlung der Nutzdaten beteiligt ist.

In einer vorteilhaften Ausführungsform des erfindungsgemäßen Verfahrens können im Rahmen der Prüfung auf Kompatibilität eine den ersten Kodierer spezifizierende Kodierungsangabe, eine den ersten Dekodierer spezifizierende Dekodierungsangabe, eine den oder die Kodierer der jeweils zu prüfenden Umsetzeinrichtung spezifizierende Umsetzer-Kodierungsangabe und/oder eine den oder die Dekodierer derselben Umsetzeinrichtung spezifizierende Umsetzer-Dekodierungsangabe erfasst werden. Diese Erfassung kann dabei insbesondere durch Analyse einer Meldung, vorzugsweise einer Signalisierungsmeldung im Rahmen des Verbindungsaufbaus, durch Konfiguration einer Umsetzeinrichtung oder eines Servers oder durch Registrierung der Kommunikationseinrichtungen bei einer Umsetzeinrichtung oder eines Servers erfolgen.

Dieses Erfassen erleichtert die Prüfung auf Kompatibilität, da lediglich durch einen einfachen Vergleich der vorstehend genannten Angaben die Kompatibilität festgestellt werden kann. Dies kann insbesondere durch einen Vergleich von der Kodierungsangabe mit der Umsetzer-Dekodierungsangabe sowie von der Dekodierungsangabe mit der Umsetzer-Kodierungsangabe durchgeführt werden.

In einer weiteren vorteilhaften Ausführungsform der Erfindung kann eine der Umsetzeinrichtungen die Kodierungs- und die Dekodierungsangabe der Kommunikationseinrichtungen erfassen und anhand der erfassten Kodierungs- und der erfassten Dekodierungsangabe prüfen, ob der erste Kodierer mit einem Dekodierer dieser Umsetzeinrichtung und der erste Dekodierer mit einem Kodierer dieser Umsetzeinrichtung kompatibel ist. Somit vereinfacht sich die Prüfung auf Kompatibilität, da die das Verfahren durchführende Umsetzeinrichtung nicht die Kodierer und Dekodierer der übrigen Umsetzeinrichtungen erfasst und für diese keine Prüfung durchführt.

Vorteilhafterweise kann diese, die Prüfung durchführende Umsetzeinrichtung eine weitere Umsetzeinrichtung informieren, sofern sich bei der Prüfung ein negatives Prüfergebnis ergibt, damit die weitere Umsetzeinrichtung ebenfalls ein erfindungsgemäßes Verfahren durchführt. In einer vorteilhaften Weiterbildung des erfindungsgemäßen Verfahrens kann somit die auf Kompatibilität prüfende Umsetzeinrichtung eine Benachrichtigungsinformation an eine weitere der Umsetzeinrichtungen senden, damit diese prüft, ob der erste Kodierer mit einem Dekodierer der weiteren Umsetzeinrichtung und der erste Dekodierer mit einem Kodierer der weiteren Umsetzeinrichtung kompatibel ist. Die Benachrichtigungsinformation kann dabei vorzugsweise die Kodierungsangabe und die Dekodierungsangabe als Parameter umfassen, so dass die weitere Umsetzeinrichtung diese Angaben nicht erneut zu bestimmen oder ermitteln braucht.

Sind die Kommunikationseinrichtungen über eine Kette von Umsetzeinrichtungen miteinander gekoppelt, so kann vorzugsweise eine dieser Umsetzeinrichtungen das erfindungsgemäße Verfahren durchführen und lediglich bei negativem Prüfergebnis, d.h. wenn fehlende Kompatibilität festgestellt wird, kann eine weitere Umsetzeinrichtung mittels der Benachrichtigungsinformation informiert werden, damit diese ebenfalls eine Ausführungsform des erfindungsgemäßen Verfahrens durchführt. Dies kann nun wiederholt durch verschiedene Umsetzeinrichtungen durchgeführt werden, bis eine der Umsetzeinrichtungen Kompatibilität feststellt. Falls keines der prüfenden Umsetzeinrichtungen Kompatibilität feststellt, können die Nutzdaten über mehrere oder alle der Umsetzeinrichtungen übertragen werden. Die Nutzdatenübermittlung kann dabei vorzugsweise mit dem Pfad der Signalisierungsmeldungen übereinstimmen, wobei dieser häufig durch eine Konfiguration der Umsetzeinrichtungen vorbestimmt ist. Somit kann eine Rückwärtskompatibilität zu üblichen Verfahren des Standes der Technik sichergestellt werden, in denen die Nutzdaten über mehrere Umsetzeinrichtungen übermittelt werden und in den jeweiligen Umsetzeinrichtungen eine Kodierung und Dekodierung der Nutzdaten durchgeführt wird.

Sobald eine der prüfenden Umsetzeinrichtungen Kompatibilität erkennt, kann vorzugsweise die Auswahl der Umsetzeinrichtung durch diese erfassende und prüfende Umsetzeinrichtung vorgenommen werden. Somit kann sich die prüfende Umsetzeinrichtung selbst auswählen, um die Nutzdaten zwischen der Ursprungs-Kommunikationseinrichtung und der Ziel-Kommunikationseinrichtung zu übertragen.

In einer weiteren vorteilhaften Ausführungsform des erfindungsgemäßen Verfahrens kann die Erfassung der Kodierungsangabe und/oder der Dekodierungsangabe anhand einer Signalisierungsmeldung, anhand der Benachrichtigungsinformation, anhand einer Konfiguration und/oder anhand einer Registrierung durchgeführt werden. Bei der Signalisierungsmeldung kann es sich vorzugsweise um eine Verbindungsaufbaumeldung von der Ursprungs-Kommunikationseinrichtung handeln, sowie um eine Bestätigungsmeldung der Ziel-Kommunikationseinrichtung im Rahmen der Verbindungssignalisierung. Mittels der Registrierung können sich vorzugsweise Kommunikationseinrichtungen bei einer Umsetzeinrichtung melden, damit diese verwalten kann, welche Kommunikationseinrichtungen direkt an die Umsetzeinrichtung gekoppelt sind und welche Codecs die Kommunikationseinrichtungen unterstützen. Alternativ oder zusätzlich können diese Angaben auch bei der Umsetzeinrichtung konfiguriert werden oder via Polling-Mechanismen abgefragt werden.

Im Rahmen der Auswahl der Umsetzeinrichtung wird ein Bewerten des ersten Kodierers, des ersten Dekodierers, der weiteren Kodierer und/oder der weiteren Dekodierer durchgeführt und eine Bewertungsfunktion gebildet, wobei die Bewertungsfunktion optimiert wird. Dies ist insbesondere vorteilhaft, wenn die Kommunikationseinrichtungen mehrere Kodierer/Dekodierer unterstützen und mittels verschiedener dieser Kodierer/Dekodierer eine Nutzdatenübermittlung möglich ist, aber die Festlegung auf einen jeweiligen Kodierer und/oder Dekodierer einen Einfluß auf die Dienstqualität, insbesondere die subjektive Sprachqualität, eine benötigte Bandbreite oder eine Prozessorenlast in den Kommunikationseinrichtungen hat. Vorzugsweise wird somit durch Auswertung der Bewertungsfunktion ermittelt, welche Kombination von Umsetzeinrichtung, Kodierer dieser Umsetzeinrichtung, Dekodierer dieser Umsetzeinrichtung, Kodierer der Ursprungs-Kommunikationseinrichtung und/oder Dekodierer der Ziel-Kommunikationseinrichtung für eine jeweilige Kommunikationssituation vorteilhaft oder optimal ist. Dabei kann die Bewertungsfunktion andere Ergebnisse liefern, wenn eine Kommunikationseinrichtung eine Teleworker-Endeinrichtung oder ein IP-Telefon in einem LAN ist, da in diesen beiden Szenarien für die Kommunikationseinrichtungen unterschiedliche Bandbreiten zur Verfügung stehen. Vorzugsweise können eine Dienstqualität an der Ursprungs-Kommunikationseinrichtung, eine Dienstqualität an der Ziel-Kommunikationseinrichtung, eine Bandbreite jeweiliger Teilverbindungen im Rahmen der Nutzdatenübertragung, eine zur Verfügung stehenden Bandbreite der jeweiligen Teilverbindungen und/oder einer Hierarchie der Umsetzeinrichtungen in der Bewertungsfunktion enthalten sein. Unter der Hierarchie der Umsetzeinrichtungen ist hierbei zu verstehen, dass es eine logische Reihenfolge von Umsetzeinrichtungen gibt, nach denen diese bevorzugt ausgewählt werden wobei die Präferenz auf derjenigen Umsetzeinrichtung liegt, die direkt an die Ziel-Kommunikationseinrichtung gekoppelt ist.

In einer weiteren vorteilhaften Ausführungsform kann, sofern im Rahmen der Prüfung auf Kompatibilität erkannt wird, dass eine direkte Nutzdaten-Kommunikation zwischen den Kommunikationseinrichtungen möglich ist, eine direkte Nutzdatenverbindung zwischen diesen Kommunikationseinrichtungen unter Umgehung der Umsetzeinrichtungen aufgebaut werden.

Ein Ausführungsbeispiel der Erfindung wird nachfolgend anhand der Zeichnung näher erklärt.

Dabei zeigen in schematischer Darstellung die
- Figuren 1-4: ein Kommunikationssystem mit zwei über Umsetzeinrichtungen miteinander gekoppelten IP-Telefonen,
- Figur 5: eine erfindungsgemäße Umsetzeinrichtung,
- Figur 6: ein Ablaufdiagram des, in einer der Umsetzeinrichtungen ablaufenden, erfindungsgemäßen Verfahrens,
- Figur 7: ein Kommunikationssystem mit zwei über Umsetzeinrichtungen miteinander gekoppelten IP-Telefonen und einer erfindungsgemäßen Server-Einrichtung und
- Figur 8: ein Ablaufdiagram des, in der Server-Einrichtung ablaufenden, erfindungsgemäßen Verfahrens.

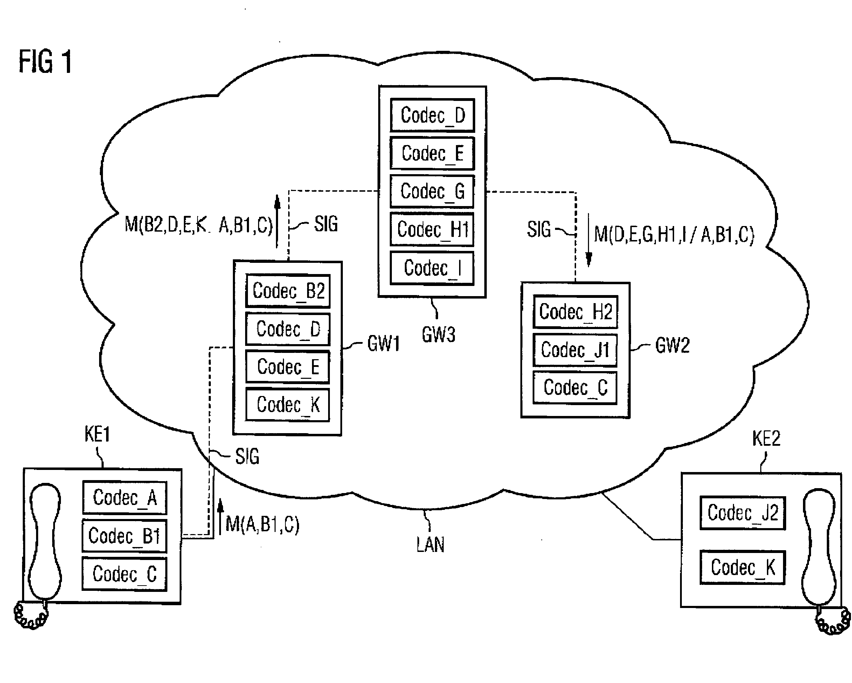

In Figur 1-4 sowie Figur 7 ist ein Kommunikationssystem mit einem ersten IP-Telefon KE1 als Ursprungs-Kommunikationseinrichtung und einem zweiten IP-Telefon KE2 als Ziel-Kommunikationseinrichtung schematisch dargestellt. Der erste Kodierer des ersten IP-Telefons KE1 ist einer der Codecs CODEC_A, CODEC_B1 und CODEC_C. Der erste Dekodierer des zweiten IP-Telefons KE2 ist einer der Codecs CODEC_J2 und CODEC_K. Hierbei soll eine Bezeichnung "CODEC_B1" bedeuten, dass dieser kompatibel ist zu einem CODEC_B2, CODEC_B3, usw., aber nicht zu einem CODEC_A oder CODEC_C. CODEC_B1, CODEC_B2, CODEC_B3, usw. sind somit zueinander kompatible Codecs basierend auf einem Codec CODEC_B. Wenn in dem Ausführungsbeispiel zwei Einrichtungen denselben Codec unterstützen, z.B. CODEC_D, dann bedeutet dies, dass beide denselben Codec zum Kodieren und Dekodieren verwenden. Dies bedeutet, dass der Kodierer eines Codecs und der Dekodierer des Codecs zueinander passend sind und damit insbesondere auch kompatibel sind. Die Codecs im Ausführungsbeispiel seien alle symmetrisch, d.h. ein Dekodierer eines Codecs kann die durch einen Kodierer dieses Codecs kodierten Daten dekodieren.

Das erste IP-Telefon KE1 ist über ein lokales Netzwerk LAN paketorientiert an einen ersten Gateway GW1 als Umsetzeinrichtung gekoppelt. Der erste Gateway GW1 unterstützt die Codecs CODEC_B2, CODEC_D, CODEC_E und CODEC_K und ist über das lokale Netzwerk LAN, insbesondere paketorientiert, an einen zweiten Gateway GW2 als Umsetzeinrichtung und einen dritten Gateway GW3 als Umsetzeinrichtung gekoppelt. Der dritte Gateway GW3 unterstützt die Codecs CODEC_D, CODEC_E, CODEC_G, CODEC_H1 und CODEC_I, während der zweite Gateway GW2 die Codecs CODEC_H2, CODEC_J1 und CODEC_E unterstützt. Der zweite Gateway ist darüber hinaus über das lokale Netzwerk LAN paketvermittelt an das zweite IP-Telefon KE2 gekoppelt. Die Kopplung der Gateways GW1,GW2,GW3 kann alternativ auch leitungsvermittelt durchgeführt werden. Das lokale Netzwerk LAN ist üblicherweise in Subnetzwerke strukturiert (nicht dargestellt).

Es sei angenommen, dass die Kopplung zwischen dem ersten IP-Telefon KE1 und dem ersten Gateway GW1 aufgrund einer Registrierung des ersten IP-Telefons KE1 beim ersten Gateway GW1 zustande gekommen ist. Analog dazu hat sich das zweite IP-Telefon KE2 beim zweiten Gateway GW2 registriert. Alternativ zur Registrierung könnte ein Gateway auch mit Daten der jeweiligen IP-Telefone konfiguriert werden oder die entsprechenden Daten von einer anderen Instanz im Netzwerk, wie einem Gatekeeper, abfragen. Weiterhin ist es möglich, dass ein Gateway alle in seinem Subnetz befindlichen IP-Telefone mittels Polling ermittelt.

Es sei angenommen, dass das erste und das zweite IP-Telefon KE1, KE2 zu jedem der Gateways GW1, GW2, GW3 eine paketorientierte Verbindung, direkt ohne Einbeziehen einer weiteren Umsetzeinrichtung, aufbauen kann. Die Gateways GW1, GW2, GW3 können weiterhin jeweils für einen Übergang zu einer leitungsorientierten Kommunikationsanlage vorgesehen sein (nicht dargestellt). Weiterhin sei angenommen, dass der erste Gateway GW1 so konfiguriert ist, dass eine Verbindung zu einem, dem ersten Gateway GW1 nicht bekannten Kommunikationspartner zum dritten Gateway GW3 weitergeleitet wird. Dieser dritte Gateway GW3 kann prüfen, ob ihm der Kommunikationspartner bekannt ist und leitet bei negativem Prüfergebnis die Verbindung an den zweiten Gateway GW2. Auf diese Weise sind die Gateways GW1,GW2,GW3 logisch in einer Kette oder einer Hierarchie entsprechend angeordnet.

Signalisierungsmeldungen M im Rahmen des Verbindungsaufbaus werden in den Figuren 1-4 durch kurze Pfeile veranschaulicht, wobei der Signalisierungspfad SIG durch eine gepunktete Linie dargestellt wird. Als Meldungsparameter werden Codec-beschreibende Angaben in Klammern zu den Signalisierungsmeldungen M angegeben, wobei aus Übersichtlichkeitsgründen nur die Zeichenkette nach dem Unterstrich der Codec-Bezeichnungen angegeben ist - also B1 für COOEC_B1 oder J für CODEC_J. Dabei kann es sich bei einer der Codec-beschreibenden Angaben (A,B1,C,...) jeweils um eine den ersten Kodierer spezifizierende Kodierungsangabe, eine den ersten Dekodierer spezifizierende Dekodierungsangabe, um eine die Kodierer der Gateways GW1, GW2, GW3 spezifizierende Umsetzer-Kodierungsangabe oder um eine die Dekodierer der Gateways GW1, GW2, GW3 spezifizierende Umsetzer-Dekodierungsangabe gemäß Patentanspruch 2 oder 12 handeln.

Nutzdatenverbindungen NV_C,NV_J,NV_B,NV_K werden durch strichpunktierte Linien dargestellt. Die Zeichenkette die den Zeichen "NV_" folgt bedeutet hierbei, welcher Codec für die jeweilige Nutzdatenverbindung ausgewählt wurde (also NV_C wird mit CODEC_C kodiert und dekodiert, NV_J mit den zueinander kompatiblen Codecs CODEC_J1 und CODEC_J2).

Figur 1 veranschaulicht die Signalisierung SIG im Rahmen des Aufbaus einer Verbindung ausgehend vom ersten IP-Telefon KEl. In einer Signalisierungsmeldung M mit den Codec-beschreibenden Angaben. A,B1,C der Codecs CODEC_A, CODEC_B1, CODEC_C als Parameter meldet es dem ihm zugeordneten Gateway GW1 die Initiierung einer Nutzdatenverbindung und informiert den Gateway GW1, dass dem ersten IP-Telefon KE1 zur Kodierung und/oder Dekodierung von Nutzdaten die drei genannten Codecs zum Kodieren zur Verfügung stehen.

Im Ausführungsbeispiel sei angenommen, dass der zuletzt in der Kette der Gateways GW1, GW2, GW3 befindliche Gateway, also der zweite Gateway GW2, zuerst eine Ausführungsform des erfindungsgemäßen Verfahrens durchführt. Dies ist insofern vorteilhaft, da dieser zweite Gateway GW2 die unterstützten Codecs des zweiten IP-Telefons KE2 Aufgrund der Registrierung des zweiten IP-Telefons KE2 oder aufgrund vorhergehender Signalisierungen kennt und bei Erhalt einer Meldung mit den unterstützten Codecs des ersten IP-Telefons KEI somit alle benötigen Daten für die Durchführung einer Kompatibilitätsprüfung von Kodierern und Dekodierern vorhanden sind.

Daher wird die durch den ersten Gateway GW1 empfangene Meldung M im ersten Gateway GW1 lediglich dazu verwendet, die unterstützten Codecs des ersten IP-Telefons KE1 aus der Meldung M auszulesen und/oder zu ermitteln und dem nächsten in der Kette liegenden Gateway, also dem dritten Gateway GW3, inklusive der unterstützten Codecs des ersten Gateways GW1 zu übermitteln. Somit sendet der erste Gateway GW1 eine Meldung M mit den Codec-beschreibenden Angaben B2,D,E,K für die Codecs des ersten Gateways GW1 sowie den Codec-beschreibenden Angaben A, B1, C für die Codecs des ersten IP-Telefons KE1. Analog sendet nun der dritte Gateway GW3 die Codec-beschreibenden Angaben D,E,G,H1, I seiner eigenen unterstützen Codecs und die Codec-beschreibenden Angaben A, B1, C der unterstützten Codecs des ersten IP-Telefons KE1 an den zweiten Gateway GW2.

Der zweite Gateway GW2 erkennt, insbesondere durch Vergleich mit seiner Datenbank, dass das zweite IP-Telefon KE2 am zweiten Gateway GW2 gekoppelt ist und ermittelt aus seiner Datenbank, welche Codecs das zweite IP-Telefon KE2 unterstützt. Weiterhin erfasst der zweite Gateway GW2 welche Codecs er selbst unterstützt und prüft ob einer der Codecs CODEC_A, CODEC_B1 und CODEC_C zum Kodieren im ersten IP-Telefon KE1 mit einem der Codecs CODEC_H2, CODEC_J1 und CODEC_C zum Dekodieren im zweiten Gateway GW2 kompatibel ist. Dies wird für CODEC_C erkannt, da das erste IP-Telefon KE1 sowie der zweite Gateway GW2 diesen Codec unterstützen. Weiterhin wird nun geprüft, ob einer der unterstützten Codecs des zweiten Gateways GW2 zum Kodieren mit einem der Codecs CODEC_J2 und CODEC_K zum Dekodieren im zweiten IP-Telefon KE2 kompatibel ist. Dies ist der Codec CODEC_J1, der mit dem Codec CODEC_J2 kompatibel ist. Diese Prüfung auf Kompatibilität kann insbesondere durch Vergleiche der Codec-beschreibenden Angaben (A,B1,C,H2,...) durchgeführt werden.

Somit stellt der Gateway GW2 Kompatibilität der Codecs zwischen erstem IP-Telefon KE1 und dem zweiten Gateway GW2 sowie zwischen dem zweiten Gateway GW2 und dem zweiten IP-Telefon KE2 fest und wählt sich selbst sowie den Codec CODEC_C sendeseitig für das erste IP-Telefon KE1, den Codec CODEC_C empfangsseitig für den zweiten Gateway GW2, den Codec CODEC_J1 sendeseitig für den zweiten Gateway GW und den Codec CODEC_J2 empfangsseitig für das zweite IP-Telefon KE2 für die Übertragung der Nutzdaten aus.

Nicht dargestellt, meldet nun der zweite Gateway GW2 den beiden IP-Telefonen KE1,KE2, mit welchen Codecs, nämlich CODEC_C bzw. CODEC_J2, sie im Folgenden direkt zum zweiten Gateway GW2 die Nutzdaten übermitteln sollen oder vom zweiten Gateway GW2 empfangen sollen.

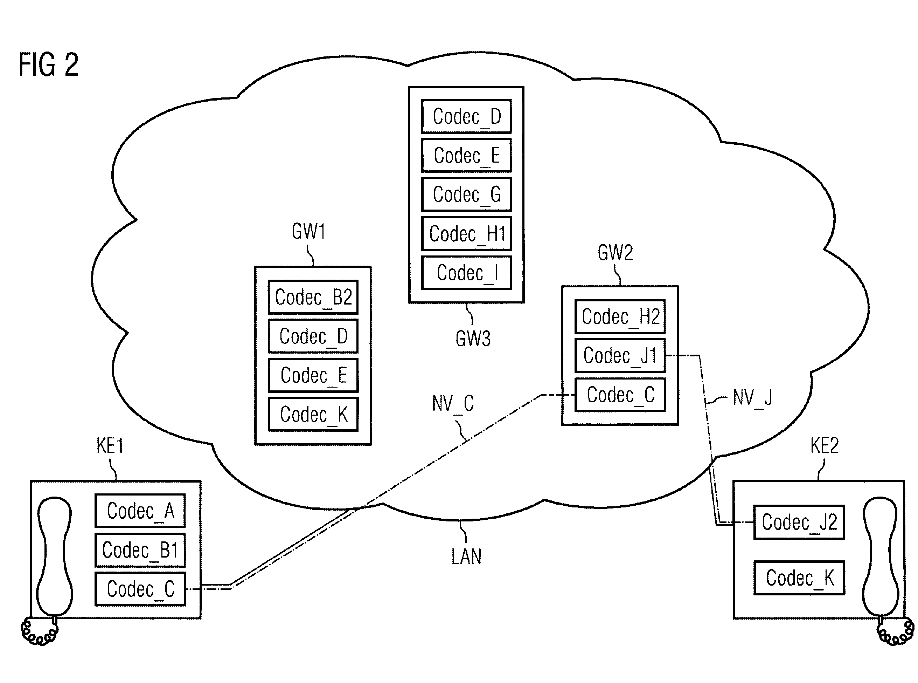

In Figur 2 wird die Nutzdatenübertragung vom ersten IP-Telefon KE1 über den zweiten Gateway GW2 zum zweiten IP-Telefon KE2 veranschaulicht. Die Nutzdatenverbindung NV_C wird vom ersten IP-Telefon KE1 zum zweiten Gateway GW2 aufgebaut, wobei die Nutzdaten im ersten IP-Telefon KE1 mittels des Codecs CODEC_C kodiert werden. Empfangsseitig werden die Nutzdaten im zweiten Gateway GW2 mit dem Codec CODEC_C dekodiert und an das zweite IP-Telefon KE2 über die Nutzdatenverbindung NV_J weitergeleitet, wobei dazu die Nutzdaten erneut, diesmal mit dem Codec CODEC_J1, kodiert werden. Das zweite IP-Telefon KE2 empfängt die derartig kodierten Nutzdaten und dekodiert diese mit dem zum Codec CODEC_J1 kompatiblen Codec CODEC_J2.

Die Nutzdaten werden dabei beispielsweise über das RTP-Protokoll (RTP: Real-Time Transport Protocol) oder über das SIP-Protokoll (SIP: Session Initiation Protocol)der IETF-Arbeitsgruppe (IETF: Internet Engineering Task Force) übertragen. Die Signalisierung wird beispielsweise über ein Protokoll gemäß der ITU-T-Empfehlung H.323 oder über das SIP-Protokoll übertragen.

Damit ist die paketorientierte Verbindung zwischen dem ersten und dem zweiten IP-Telefon KE1,KE2 durchgeschaltet, wobei lediglich in einer Umsetzeinrichtung - dem zweiten Gateway GW2 - die Nutzdaten dekodiert und kodiert werden und die weiteren im Signalisierungspfad befindlichen Umsetzeinrichtungen umgangen werden. Dies ist insofern vorteilhaft, als dass dadurch nur geringe Qualitätsverluste der Nutzdaten auftreten und auch nur geringe Verzögerungen auftreten, da weniger Jitter-Buffer - der des zweiten Gateways GW2 und der des zweiten IP-Telefons KE2 - in der Nutzdatenübermittlung durchlaufen werden.

Weiterhin ist vorteilhaft, dass mittels der genannten Verfahrensschritte eine Nutzdatenverbindung zwischen Kommunikationsendeinrichtungen aufgebaut werden kann, obwohl die Kommunikationsendeinrichtungen keine gemeinsamen Codecs unterstützen. Darüber hinaus braucht den Kommunikationsendeinrichtungen jeweils nur einen Gateway bekannt zu sein und.

Weiterhin ist vorteilhaft, dass das Verfahren lediglich auf der Erfassung von üblicherweise einfach zu ermittelnden Angaben beruht und die Prüfung auf Kompatibilität mit diesen Angaben einfach durchzuführen ist.

Darüber hinaus ist vorteilhaft, dass durch die zwei Nutzdatenverbindungen NV_C und NV_J für das jeweilige IP-Telefon KE1, KE2 dieser Nutzdatenverbindungen NV_C, NV_J ein für das jeweilige IP-Telefon KE1, KE2 optimaler Codec ausgewählt werden kann. So kann sich z.B. ein IP-Telefon die zur Verfügung stehende Bandbreite mit einem Arbeitsplatzrechner teilen. Somit ist für die eingeschränkte Bandbreite ein hoch komprimierender Codec erforderlich. Dagegen kann für ein IP-Telefon in einem LAN ein lediglich leicht komprimierender Codec vorteilhafterweise ausgewählt werden, da hier eine größere Bandbreite zur Verfügung steht. Beide Anforderungen können von dem zweiten Gateway GW2 erfüllt werden, da dieser für beide Nutzdatenverbindungen NV_C, NV_J getrennt die Codecs auswählen kann.

Weiterhin kann je Teilverbindung jeweils ein an eine in der Teilverbindung zur Verfügung stehenden Bandbreite optimierter Codec ausgewählt werden, so dass insbesondere bei Teleworking- oder Heim-Arbeitsplätzen mit geringer Bandbreite, z.B. beschränkt durch eine schmalbandige Modemverbindung, eine weiterhin gute Nutzdatenqualität gesichert werden kann.

Bei so genannten IP-Softclients oder Multimedia-Applikationen, die auf einem Rechner laufen und sich den Prozessor des Rechners mit weiteren Anwendungen teilen, kann vorteilhafterweise ebenfalls ein Codec ausgewählt werden, der an eine Prozessorbelastung angepasst ist.

Während das in den Figuren 1 und 2 schematisch veranschaulichte Verfahren für die Übertragung von Nutzdaten von dem ersten IP-Telefon KE1 zum zweiten IP-Telefon KE2 vorgesehen ist, kann das Verfahren auf einfache, analoge Weise für bidirektionale Kommunikation erweitert werden. Insbesondere kann die Auswahl der Codecs für beide Kommunikationsrichtungen gültig sein. Alternativ kann für beide Kommunikationsrichtungen das Verfahren getrennt durchgeführt werden, so dass in beide Kommunikationsrichtungen verschiedene Codecs ausgewählt werden können.

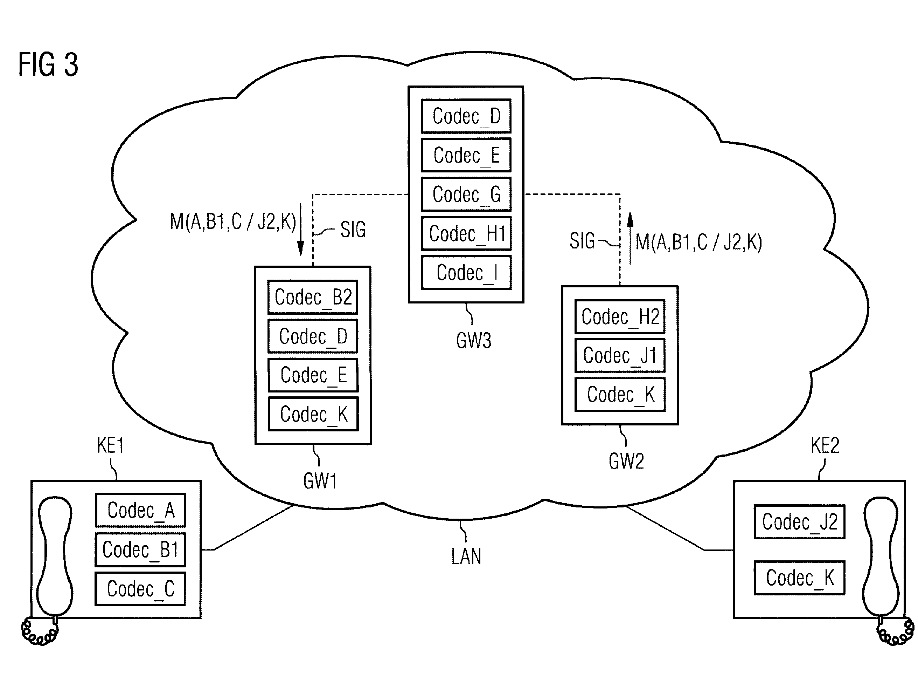

Die Konfiguration der Gateways GW1, GW2, GW3 in Figur 3 unterscheidet sich von der in den Figuren 1 und 2 dargestellten Konfiguration lediglich dadurch, dass der zweite Gateway GW2 anstatt dem Codec CODEC_C einen Codec CODEC_K unterstützt. Somit besitzt der zweite Gateway GW2 zwei kompatible Codecs, nämlich CODEC_J1 und CODEC_K, zu den Codecs CODEC_J2 und CODEC_K des zweiten IP-Telefons KE2. Dagegen besitzt er aber keinen kompatiblen Codec zu den Codecs CODEC_A, CODEC_B1 und CODEC_C des ersten IP-Telefons KE1.

Basierend auf diese Konfiguration wird analog zu Figur 1 eine Signalisierung SIG bis zum zweiten Gateway GW2 aufgebaut (nicht dargestellt). In diesem läuft nach Erhalt einer Meldung im Rahmen der Signalisierung SIG das vorstehend erläuterte Verfahren ab, wobei die Prüfung auf Kompatibilität im zweiten Gateway GW2 ein negatives Prüfergebnis liefert und insbesondere keine Kompatibilität zwischen den Kodierern der Codecs CODEC_A, CODEC_B1, CODEC_C des ersten IP-Telefons KE1 und den Dekodierern der Codecs CODEC_H2, CODEC_J1, CODEC_K des zweiten Gateways GW2 erkennt.

Der zweite Gateway GW2 meldet in der folgenden Signalisierungsmeldung M als Benachrichtigungsinformation und/oder als Initiierungsmeldung dem dritten Gateway GW3, dass dieser ebenfalls eine Ausführungsform des erfindungsgemäßen Verfahrens ablaufen lassen soll. Weiterhin werden die unterstützten Codecs der beiden IP-Telefone KE1, KE2 dem dritten Gateway GW3 bekannt gegeben, indem in der Signalisierungsmeldung M die Codec-beschreibenden Angaben A,B1,C,J2,K der beiden IP-Telefone KE1, KE2 übermittelt werden. Zusätzlich zu diesen Codecs erfasst nun der dritte Gateway GW3 seine eigenen Codecs und prüft jeden einzelnen gegen die Codecs der IP-Telefone KE1, KE2, um Kompatibilität festzustellen. Im vorliegenden Ausführungsbeispiel kann dabei weder ein kompatibler Codec mit dem ersten IP-Telefon KE1 noch ein kompatibler Codec mit dem zweiten IP-Telefon KE2 gefunden werden.

Aufgrund dieses negativen Prüfergebnisses sendet der dritte Gateway GW3, wie in Figur 3 veranschaulicht, eine weitere Signalisierungsmeldung M als Benachrichtigungsinformation mit den Codecs der beiden IP-Telefone KE1, KE2 als Parameter zum ersten Gateway GW1. Daraufhin wird eine Ausführungsform des erfindungsgemäßen Verfahrens im ersten Gateway GW1 ausgeführt.

Der erste Gateway GW1 erfasst daraufhin seine eigenen Codecs sowie die Codecs der beiden IP-Telefone KE1, KE2 und prüft oder vergleicht diese paarweise. Dabei erkennt der erste Gateway GW1 Kompatibilität zwischen dem Codec CODEC_B1 des ersten IP-Telefons KE1 zum Kodieren der Nutzdaten und dem Codec CODEC_B2 des ersten Gateways GW1 zum Dekodieren der dermaßen kodierten Nutzdaten. Weiterhin erkennt er Kompatibilität zwischen dem Codec CODEC_K des ersten Gateways GW1 zum Kodieren der Nutzdaten und dem Codec CODEC_K des zweiten IP-Telefons KE2 zum Dekodieren der dermaßen kodierten Nutzdaten.

Somit stellt der erste Gateway GW1 Kompatibilität der Codecs fest und wählt sich selbst als Gateway für die Nutzdatenübertragung aus und informiert die beiden IP-Telefone KE1, KE2 vorzugsweise über Bestätigungsmeldungen im Rahmen der Signalisierung darüber (nicht dargestellt).

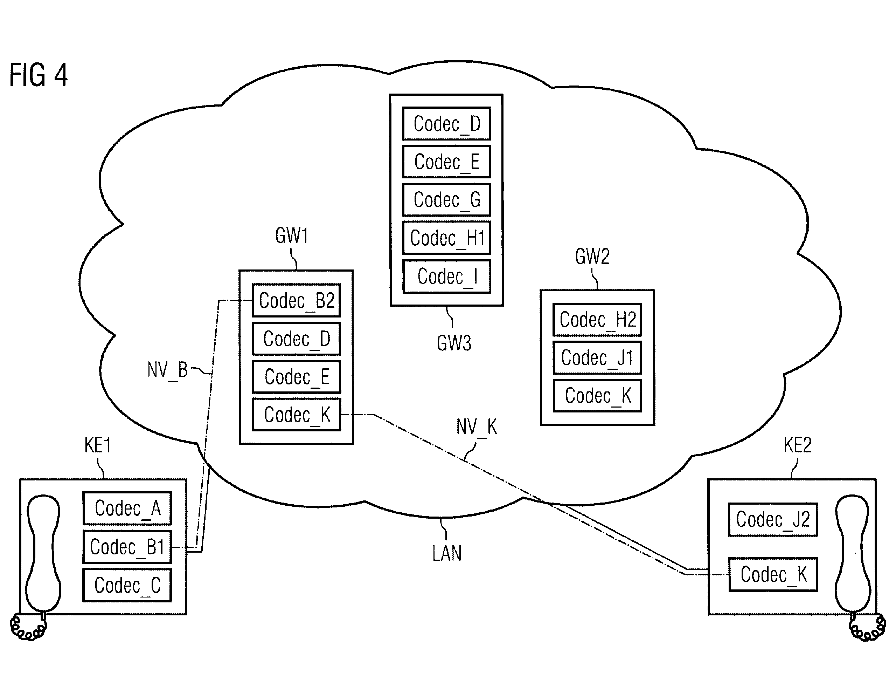

Darauf folgend wird - analog zu Figur 2 - in Figur 4 die Nutzdatenübertragung vom ersten IP-Telefon KE1 über den ersten Gateway GW1 zum zweiten IP-Telefon KE2 unter Umgehung des zweiten und dritten Gateways GW2,GW3 veranschaulicht. Die Nutzdatenverbindung NV_B wird vom ersten IP-Telefon KE1 zum ersten Gateway GW1 aufgebaut, wobei die Nutzdaten im ersten IP-Telefon KE1 mittels des Codecs CODEC_B1 kodiert werden. Empfangsseitig werden die Nutzdaten im ersten Gateway GW1 mit dem zum Codec CODEC_B1 kompatiblen Codec CODEC_B2 dekodiert und an das zweite IP-Telefon KE2 über die Nutzdatenverbindung NV_K weitergeleitet, wobei dazu die Nutzdaten erneut, diesmal mit dem Codec CODEC_K kodiert werden. Das zweite IP-Telefon KE2 empfängt die derartig kodierten Nutzdaten und dekodiert diese mit dessen Codec CODEC_K.

Damit ist die paketorientierte Verbindung zwischen dem ersten und dem zweiten IP-Telefon KE1, KE2 durchgeschaltet, wobei wiederum lediglich in einer der Umsetzeinrichtungen die Nutzdaten dekodiert und kodiert werden und die weiteren im Signalisierungspfad befindlichen Umsetzeinrichtungen umgangen werden.

Das Verfahren ist insofern vorteilhaft, als dass sich die Gateways GW1, GW2, GW3 gegenseitig informieren, ob einer der Gateways das erfindungsgemäße Verfahren auszuführen hat. Somit braucht eine Kommunikationseinrichtung lediglich einen der Gateways kennen und auch nur diesem die Initiierung des Verbindungsaufbaus mitteilen.

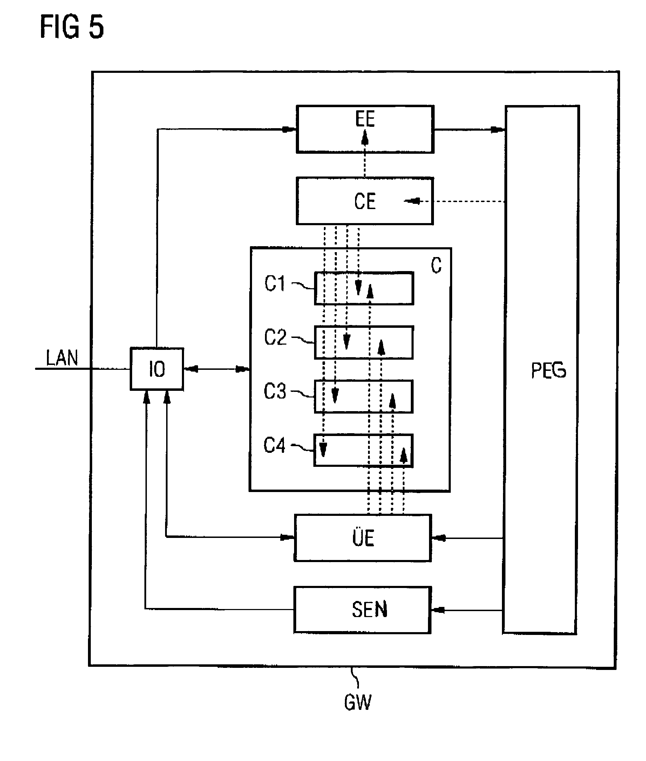

Figur 5 zeigt schematisch einen Gateway GW als Umsetzeinrichtung zur Durchführung einer Ausführungsform des erfindungsgemäßen Verfahrens. Der Gateway GW ist hierbei an ein lokales Netzwerk LAN gekoppelt über das Meldungen von und/oder an die Kommunikationseinrichtungen sowie weiterer Umsetzeinrichtungen übermittelt werden. Diese Übermittlung und/oder dieser Empfang von den Meldungen, insbesondere zur Übermittlung von Signalisierungen und Nutzdaten erfolgt über eine Ein/Ausgangseinheit IO.

Die Ein/Ausgangseinheit IO und weitere Komponenten des Gateways GW sind in Figur 5 als Rechtecke dargestellt. Komponenten die miteinander Daten austauschen sind durch einen gestrichelten Pfeil miteinander verbunden. Eine Komponente, die eine weitere Komponente aufruft und evtl. in diesem Rahmen auch Daten übermittelt, besitzt einen durchgehenden Pfeil von der Komponente zu der weiteren Komponente.

Die Ein/Ausgangseinheit IO des Gateways GW kann Nutzdaten an die Codecs C umfassend aus einem Codec C1, einem Codec C2, einem Codec C3 und einem Codec C4 zum Kodieren und Dekodieren der Nutzdaten übermitteln und die dermaßen bearbeiteten Nutzdaten ans lokale Netzwerk LAN weiterleiten. Weiterhin besitzt die Ein/Ausgangseinheit IO Schnittstellen zu einer Empfangseinheit EE, einer Übertragungseinheit ÜE und einer Sendeeinheit SEN.

Neben der Ein/Ausgangseinheit IO umfasst der Gateway GW die Empfangseinheit EE zum Empfangen einer Initiierungsmeldung von einer weiteren Umsetzeinrichtung, beispielsweise eine Meldung vom zweiten Gateway GW2 zum dritten Gateway GW3 der Figuren 1-4 und/oder zum Empfangen einer Signalisierungsmeldung, insbesondere einer Verbindungsaufbaumeldung von einer Ursprungs-Kommunikationseinrichtung - insbesondere des ersten IP-Telefons KE1 der Figuren 1-4, und zum Ansteuern einer Prüfeinrichtung PEG bei Empfang der Initiierungsmeldung und/oder der Signalisierungsmeldung.

Weiterhin umfasst der Gateway GW eine Kodier/Dekodier-Ermittlungseinheit CE zum Erfassen einer den ersten Kodierer der Ursprungs-Kommunikationseinrichtung spezifizierenden Kodierungsangabe und einer den ersten Dekodierer der Ziel-Kommunikationseinrichtung spezifizierenden Dekodierungsangabe. Dabei fragt die Kodier/Dekodier-Ermittlungseinheit CE von der Empfangseinheit EE die Kodierungs/Dekodierungsangaben spezifizierende Parameter der empfangenen Meldungen ab, ermittelt die Kodierungs-/Dekodierungsangaben aufgrund einer vorgenommen Konfigurierung des Gateways GW oder aufgrund einer durchgeführten Registrierung einer Kommunikationseinrichtung bei dem Gateway GW. Weiterhin ermittelt die Kodier/Dekodier-Ermittlungseinheit CE die unterstützten Kodierer und/oder Dekodierer des Gateways GW durch Konfiguration, durch Erkennen der vorhandenen Codecs C oder durch Abfragen der Codecs C.

Der Gateway GW umfasst darüber hinaus die Prüfeinrichtung PEG zum Prüfen, ob der erste Kodierer mit einem Dekodierer der Codecs C des Gateways GW und der erste Dekodierer mit einem Kodierer der Codecs C des Gateways GW kompatibel ist. Dabei fragt die Prüfeinrichtung PEG die erfassten Kodierungs- und Dekodierungsangaben von der Kodier/Dekodier-Ermittlungseinheit CE ab.

Falls die Prüfeinrichtung PEG Kompatibilität feststellt aktiviert diese die Übertragungseinheit ÜE zum Übertragen, der Nutzdaten von der Ursprung- zu der Ziel-Kommunikationseinrichtung. Daraufhin schickt die Übertragungseinheit ÜE den Kommunikationseinrichtungen Signalisierungsmeldungen, dass die Nutzdaten im Folgenden über den Gateway GW gesendet werden sollen und übermittelt Codec-Informationen - z.B. Codecbeschreibende Angaben - der ausgewählten Codecs des Gateways GW an die Kommunikationseinrichtungen.

Zur Übermittlung der Nutzdaten kann die Übertragungseinheit ÜE auf die Codecs C zugreifen und die über die Ein/Ausgabeeinheit IO - zu einem späteren Zeitpunkt - empfangenen Nutzdaten dekodieren und die zu sendenden Nutzdaten kodieren. Dabei werden in der Übertragungseinheit ÜE unter Zugriff auf die Codecs C die mit dem ersten Kodierer kodierten Nutzdaten mit einem kompatiblen Dekodierer der Codecs C des Gateways GW dekodiert und die mit dem ersten Dekodierer dekodierbaren Nutzdaten mit einem kompatiblen Kodierer der Codecs C des Gateway GW kodiert.

Wenn die Prüfeinrichtung PEG keine Kompatibilität feststellt aktiviert sie die Sendeeinheit SEN, die über die Ein/Ausgabeeinheit IO eine Initiierungsmeldung an eine weitere Umsetzeinrichtung absendet, damit die weitere Umsetzeinrichtung informiert wird, dass der die Prüfung durchführende Gateway GW ein negatives Prüfergebnis geliefert hat und eine der weiteren Gateways ebenfalls eine Kompatibilitätsprüfung durchführen soll. Vorzugsweise übermittelt die Sendeeinheit SEN in der Initiierungsmeldung die in der Kodier/Dekodier-Ermittlungseinheit CE ermittelten Kodierungs- und Dekodierungsangaben der Kommunikationseinrichtungen.

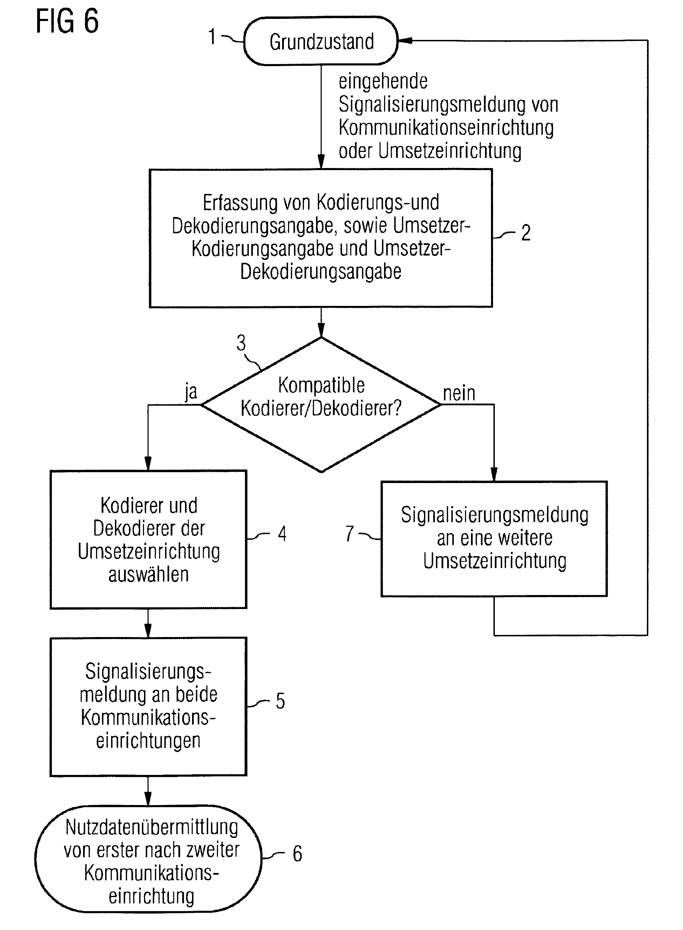

Figur 6 stellt ein Ablaufdiagramm dar, das das Zusammenwirken der vorstehend genannten Gateway-Komponenten veranschaulichen soll. Ausgehend von einem Grundzustand 1 des Gateways GW bewirkt eine eingehende Signalisierungsmeldung von einer Kommunikationseinrichtung oder einem weiteren Gateway bei der Ein/Ausgabeeinheit IO ein Weiterleiten dieser Informationen zur Empfangseinheit EE und dort, dass eine Aktion 2 in der Kodier/Dekodier-Ermittlungseinheit CE ausgeführt wird. Aktion 2 ist dabei die Erfassung von Kodierungs- und Dekodierungsangabe der Kommunikationseinrichtungen sowie von Umsetzer-Kodierungsangabe und -Dekodierungsangabe des Gateways GW. In einer Abfrage 3 führt die Prüfeinheit PE die Kompatibilitätsprüfung von Kodierer-Dekodierer-Paaren durch. Wird keine Kompatibilität zwischen Kodierern/Dekodieren der Kommunikationseinrichtungen mit den Dekodierern/Kodierern des Gateways GW festgestellt, wird die Aktion 7, das Versenden einer Signalisierungsmeldung, insbesondere der Initiierungsmeldung, an eine weitere Umsetzeinrichtung, ausgeführt. Anschließend kehrt der Gateway GW in den Grundzustand 1 zurück.

Bei positivem Prüfergebnis in der Prüfeinheit PE wird der positiv geprüfte Kodierer der Codecs C des Gateways GW und der positiv geprüfte Dekodierer der Codecs C des Gateways GW ausgewählt - Aktion 4 - und eine Signalisierungsmeldung, z.B. eine Bestätigungsmeldung im Rahmen der Verbindungsaufbausignalisierung, an die beiden Kommunikationseinrichtungen übermittelt - Aktion 5.

Daraufhin kann der Gateway GW in den Zustand 6 zur Übermittlung der Nutzdaten zwischen den beiden Kommunikationseinrichtungen wechseln, wobei die ausgewählten Kodierer und Dekodierer zur Kodierung bzw. Dekodierung der Nutzdaten eingesetzt werden.

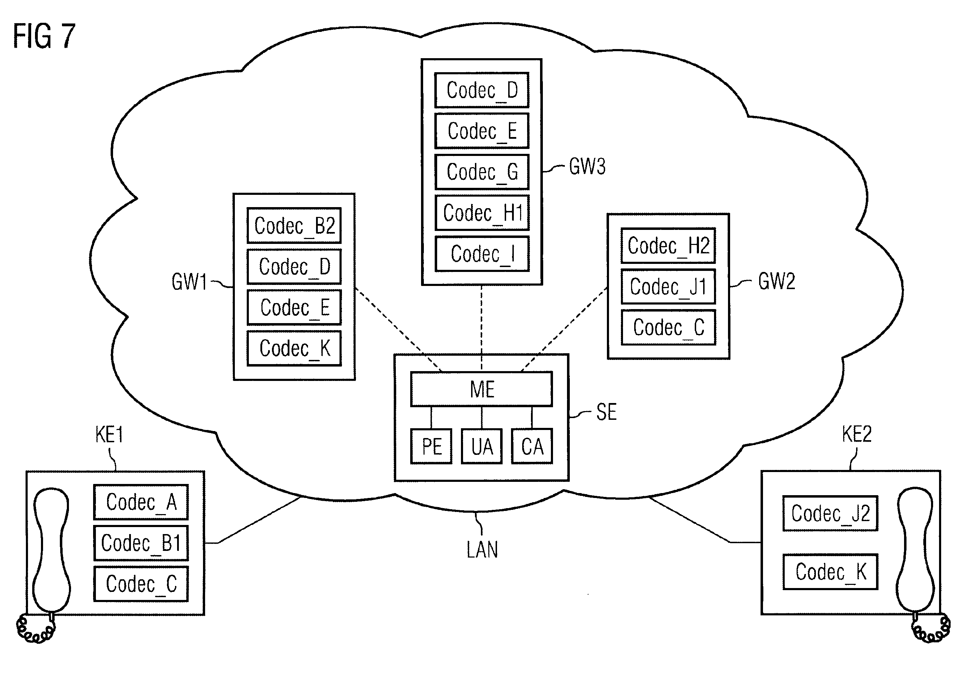

Figur 7 stellt schematisch ein Kommunikationssystem analog zu den Figuren 1-4 dar, wobei eine Ausprägung des erfindungsgemäßen Verfahrens in einer Server-Einrichtung SE ausgeführt wird. Die logischen Verbindungen zwischen den Gateways GW1, GW2,GW3 und einer Meldungseinheit ME der Server-Einrichtung SE ist durch eine gestrichelte Linie dargestellt. So eine logische Verbindung kann dabei auf einem paketorientierten oder einem leitungsorientierten Protokoll basieren. Insbesondere werden darüber Meldungen zur Ansteuerung der Gateways GW1, GW2,GW3 an diese übermittelt und Informationsmeldungen von diesen Gateways empfangen.

Ansonsten entspricht das in Figur 7 dargestellte Kommunikationssystem und die Konfiguration der IP-Telefone KE1, KE2 und der Gateways GW1,GW2,GW3 der dargestellten Konfiguration von Figur 1.

Die Server-Einrichtung SE umfasst neben der Meldungseinheit ME eine Prüfeinheit PE, eine Umsetzeinrichtung-Auswahleinheit UA und eine Kodierer/Dekodierer-Auswahleinheit CA. Mit diesen als Rechtecke dargestellten Komponenten kann die Server-Einrichtung SE das Verfahren zum Übertragen von Nutzdaten vom ersten IP-Telefon KE1 mit einem ersten Kodierer zum Kodieren der Nutzdaten zum zweiten IP-Telefon KE2 mit einem ersten Dekodierer zum Dekodieren der Nutzdaten, steuern, wobei die Server-Einrichtung SE eine Prüfung durchführt um einen der Gateways GW1, GW2, GW3 für die Nutzdatenübertragung auszuwählen.

Die Prüfeinheit PE führt die genannte Prüfung auf Kompatibilität des ersten Kodierers mit einem Dekodierer einer jeweiligen der Gateways GW1,GW2,GW3 und des ersten Dekodierers mit einem Kodierer dieses jeweiligen Gateways GW1,GW2,GW3 durch.

Bei positiver Prüfung wird die Umsetzeinrichtung-Auswahleinheit UA und die Kodierer/Dekodierer-Auswahleinheit CA aufgerufen. Bei einer jeweiligen negativen Prüfung führt die Prüfeinheit PE die Prüfung für einen weiteren der Gateways GW1,GW2,GW3 durch.

Die Server-Einrichtung SE umfasst die Umsetzeinrichtung-Auswahleinheit UA zum Auswählen einer derjenigen Gateways GW1,GW2,GW3, bei denen die Prüfung Kompatibilität feststellt - im vorliegenden Ausführungsbeispiel kann dies bei den gegebenen Codecs entweder der zweite Gateway GW2 oder der erste Gateway GW1 sein - aus der Menge der zu prüfenden Gateways GW1,GW2,GW3 zur Übertragung der Nutzdaten.

Im Folgenden sei angenommen, dass der erste Gateway GW1 ausgewählt wird.

Weiterhin umfasst die Server-Einrichtung SE die Kodierer/Dekodierer-Auswahleinheit CA zum Auswählen eines mit dem ersten Kodierer, im Ausführungsbeispiel Codec CODEC_B1, kompatiblen Dekodierers, im Ausführungsbeispiel Codec CODEC_B2, und eines mit dem ersten Dekodierer, im Ausführungsbeispiel Codec CODEC_K, kompatiblen Kodierers, im Ausführungsbeispiel ebenfalls Codec CODEC_K, des ausgewählten ersten Gateways GW1 für die Dekodierung der mit dem ersten Kodierer kodierten Nutzdaten und für die Kodierung der mit dem ersten Dekodierer dekodierbaren Nutzdaten.

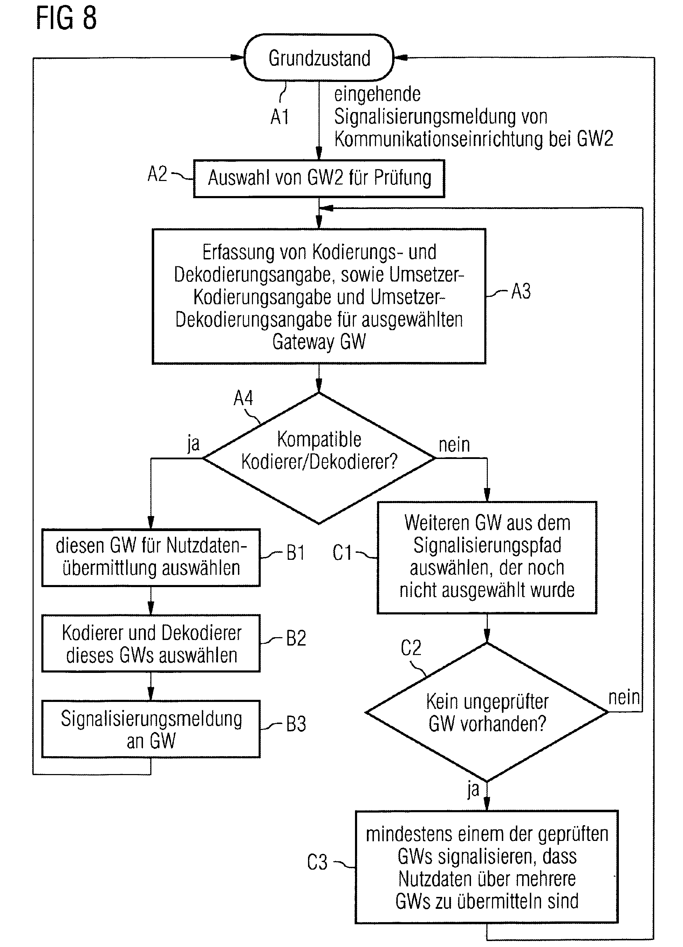

Ein detaillierter Ablauf des Verfahrens in der Server-Einrichtung SE wird im Folgenden in Figur 8 anhand eines Ablauf-Diagramms erläutert. Dabei sei angenommen, dass wie in Figur 1 eine Signalisierungsmeldung vom ersten IP-Telefon KE1 beim zweiten Gateway GW2 im Rahmen des Verbindungsaufbaus eintrifft. Aufgrund dessen, sendet der zweite Gateway GW2 eine Meldung zur Server-Einrichtung SE, die dadurch ihren Grundzustand A1 verlässt und die Aktion A2 ausführt, in der der zweite Gateway GW2 für eine später folgende Prüfung auf Kompatibilität ausgewählt wird.

Durch eine Aktion A3 werden nun die Kodierungs- und Dekodierungsangaben der beiden IP-Telefone KE1, KE2 sowie des ausgewählten zweiten Gateways GW2 erfasst. Danach folgend, wird durch eine Abfrage A4 in der Prüfeinheit PE geprüft, ob Kompatibilität zwischen den erfassten Codecs vorhanden ist. Dies ist bei Auswahl des Codecs CODEC_C als erster Kodierer im ersten IP-Telefon KE1, des Codecs CODEC_C als Dekodierer des zweiten Gateways GW2, des Codecs CODEC_J1 als Kodierer des zweiten Gateways GW2 und des Codecs CODEC_J2 als Dekodierer des zweiten IP-Telefons KE2 gegeben.

Somit erkennt die Prüfeinheit PE Kompatibilität und die Server-Einrichtung SE führt daraufhin die Aktion B1 aus, indem sie den zweiten Gateway GW2 für die Nutzdatenübermittlung auswählt, die Codecs CODEC_C und CODEC_J1 des zweiten Gateways GW2 auswählt (Aktion B2) und dies zumindest dem zweiten Gateway GW2 signalisiert (Aktion B3). Damit ist das Verfahren in der Server-Einrichtung SE beendet und die Server-Einrichtung SE geht zurück in den Grundzustand A1.

Der zweite Gateway GW2 kann daraufhin - nicht dargestellt - Meldungen an die beiden IP-Telefone KE1, KE2 senden, um diesen bekannt zu geben, dass die Nutzdaten über den zweiten Gateway GW2 übermittelt werden sollen und welche Codecs von den IP-Telefonen KE1, KE2 jeweils verwendet werden sollen.

Falls die Prüfeinheit PE keine Kompatibilität für den untersuchten zweiten Gateway GW2 festgestellt hätte, wäre das Verfahren mit einer Aktion C1 fortgesetzt worden, in der ein weiterer, bisher noch nicht geprüfter Gateway aus dem Signalisierungspfad - im vorliegenden Ausführungsbeispiel der erste oder der dritte Gateway GW1, GW3 - ausgewählt wird.

Falls durch eine darauf folgende Prüfung C2 festgestellt wird, dass bisher ungeprüfte Gateways vorhanden sind, wird zufällig oder nach einem bestimmten Auswahlverfahren einer dieser Gateways ausgewählt. Weiter wird das erfindungsgemäße Verfahren dann rekursiv mit der Aktion A3 fortgesetzt.

Falls durch die Prüfung C2 festgestellt wird, dass bereits alle Gateways GW1, GW2, GW3 geprüft worden sind und in keiner dieser Prüfungen Kompatibilität der Codecs erkannt worden sind, wird durch eine Aktion C3 das in der Server-Einrichtung ablaufende Verfahren so beendet, dass die Nutzdaten über alle im Signalisierungspfad befindlichen Gateways, im vorliegenden Ausführungsbeispiel der erste, der zweite und der dritte Gateway GW1,GW2,GW3, übermittelt werden. Eine diese Tatsache anzeigende Information wird von der Server-Einrichtung SE an zumindest einen der Gateways GW1, GW2, GW3 übermittelt.

Damit ist das erfindungsgemäße Verfahren in der Server-Einrichtung SE beendet. Die Server-Einrichtung SE kann somit in ihren Grundzustand A1 zurückkehren.

## Patentansprüche

1. Verfahren zum Übertragen von Nutzdaten von einer Ursprungs-Kommunikationseinrichtung (KE1) mit einem ersten Kodierer, der mehrere erste Codecs (CODEC_A,CODEC_B1,CODEC_C) aufweist, zum Kodieren der Nutzdaten zu einer Ziel-Kommunikationseinrichtung (KE2) mit
einem ersten Dekodierer, der mehrere zweite Codecs (CODEC_J2,CODEC_K) aufweist, zum Dekodieren der Nutzdaten, wobei die Übertragung über ein Kommunikationsnetz (LÄN) mit mehreren Umsetzeinrichtungen (GW1, GW2, GW3), die weitere Kodierer und Dekodierer (CODEC_B2, CODEC_D,CODEC_H2,...) aufweisen, erfolgt, wobei
a) für zumindest eine der sich im Signalisierungspfad für einen Verbindungsaufbau zwischen der Ursprungs-Kommunikationseinrichtung (KE1) und der Ziel-Kommunikationseinrichtung (KE2) befindenden Umsetzeinrichtungen (GW1, GW2, GW3) jeweils geprüft wird, ob der erste Kodierer (CODEC_A,CODEC_B1,CODEC_C) mit einem Dekodierer (CODEC_B2,CODEC_D,CODEC_H2,...) dieser Umsetzeinrichtung (GW1, GW2, GW3) und der erste Dekodierer (CODEC_J2, CODEC_K) mit einem Kodierer (CODEC_B2,CODEC_D,CODEC_H2,...) dieser Umsetzeinrichtung (GW1, GW2, GW3) kompatibel ist,
b) zur Übertragung der Nutzdaten eine derjenigen Umsetzeinrichtungen (GW1,GW2,GW3), bei denen die Prüfung Kompatibilität feststellt, aus den Umsetzeinrichtungen (GW1, GW2,GW3) ausgewählt wird, wobei
die ausgewählte Umsetzeinrichtung (GW1, GW2, GW3) die mit dem ersten Kodierer (CODEC_A,CODEC_B1,CODEC_C) kodierten Nutzdaten mit dem kompatiblen Dekodierer (CODEC_B2, CODEC_D,CODEC_H2,...) der ausgewählten Umsetzeinrichtung (GW1, GW2, GW3) dekodiert und die mit dem ersten Dekodierer (CODEC_J2, CODEC_K) dekodierbaren Nutzdaten mit dem kompatiblen Kodierer (CODEC_B2, CODEC_D,CODEC_H2,...) der ausgewählten Umsetzeinrichtung (GW1,GW2,GW3) kodiert, wobei,
c) im Rahmen der Auswahl der Umsetzeinrichtung (GW1,GW2, GW3) ein Bewerten des ersten Kodierers (CODEC_A,CODEC_B1, CODEC_C), des ersten Dekodierers (CODEC_J2,CODEC_K), der weiteren Kodierer (CODEC_B2,CODEC_D,CODEC_H2,...) und/oder der weiteren Dekodierer (CODEC_B2,CODEC_D,CODEC_H2,...) durchgeführt wird, wobei
d) eine Kombination von Umsetzeinrichtung (GW1,GW2,GW3), Kodierer (CODEC_B2,CODEC_D,CODEC_H2,...) dieser Umsetzeinrichtung (GW1, GW2, GW3), Dekodierer (CODEC_B2,CODEC_D, CODEC_H2,...) dieser Umsetzeinrichtung (GW1,GW2,GW3), Kodierer (CODEC_A,CODEC_B1,CODEC_C) der Ursprungs-Kommunikationseinrichtung (KE1) und/oder Dekodierer (CODEC_J2, CODEC_K) der Ziel-Kommunikationseinrichtung (KE2) derart ausgewählt wird,
d1) dass eine Bewertungsfunktion ausgeführt wird abhängig von mindestens einem der folgenden Merkmale:
i) einer Dienstqualität an der Ursprungs-Kommunikationseinrichtung (KE1),
ii) einer Dienstqualität an der Ziel-Kommunikationseinrichtung (KE2),
iii) einer Bandbreite jeweiliger Teilverbindungen (NV_C,NV_J,NV_B,NV_K) im Rahmen der Nutzdatenübertragung,
iv) einer zur Verfügung stehenden Bandbreite der jeweiligen Teilverbindungen (NV_C,NV_J,NV_B,NV_K),
v) einer Hierarchie der Umsetzeinrichtungen (GW1, GW2,GW3), wobei die Präferenz auf derjenigen Umsetzeinrichtung (GW2) liegt, die direkt an die Ziel-Kommunikationseinrichtung (KE2) gekoppelt ist, und
d2) dass die Bewertungsfunktion unter Verwendung von mindestens einem der Merkmale i) bis v) optimiert wird.

2. Verfahren nach Anspruch 1,
**dadurch gekennzeichnet,**
**dass** eine Signalisierung (SIG) zwischen der Ursprungs-(KE1) und der Ziel-Kommunikationseinrichtung (KE2) über die Umsetzeinrichtungen (GW1,GW2,GW3) durchgeführt wird und
die Nutzdaten unter Umgehung einer der nicht ausgewählten dieser Umsetzeinrichtungen (GW1, GW2, GW3) übermittelt werden.

3. Verfahren nach einem der vorhergehenden Ansprüche,
**dadurch gekennzeichnet,**
**dass** die Nutzdaten ausschließlich über die ausgewählte Umsetzeinrichtung (GW1, GW2, GW3) unter Umgehung der nicht ausgewählten Umsetzeinrichtungen (GW1, GW2, GW3) übermittelt werden.

4. Verfahren nach einem der vorhergehenden Ansprüche,
**dadurch gekennzeichnet,**
**dass** im Rahmen der Prüfung auf Kompatibilität eine den ersten Kodierer (CODEC_A,CODEC_B1,CODEC_C) spezifizierende Kodierungsangabe (A, B1, C), eine den ersten Dekodierer (CODEC_J2, CODEC_K) spezifizierende Dekodierungsangabe (J2,K), eine den oder die Kodierer (CODEC_B2, CODEC_D, CODEC_H2, ...) der jeweils zu prüfenden Umsetzeinrichtung (GW1,GW2,GW3) spezifizierende Umsetzer-Kodierungsangabe (B2, D, H2,...) und/oder eine den oder die Dekodierer (CODEC_B2, CODEC_D, CODEC_H2,...) derselben Umsetzeinrichtung (GW1,GW2,GW3) spezifizierende Umsetzer-Dekodierungsangabe (B2, D, H2,...) erfasst werden.

5. Verfahren nach Anspruch 4,
**dadurch gekennzeichnet,**
**dass** eine der Umsetzeinrichtungen (GW1,GW2,GW3) die Kodierungs- (A,B1,C) und die Dekodierungsangabe (J2,K) erfasst und anhand der erfassten Kodierungs- (A, B1,C) und der erfassten Dekodierungsangabe (J2,K) prüft, ob der erste Kodierer (CODEC_A, CODEC_B1, CODEC_C) mit einem Dekodierer (CODEC_B2, CODEC-D, CODEC_H2,...) dieser Umsetzeinrichtung (GW1, GW2, GW3) und der erste Dekodierer (CODEC_J2,CODEC_K) mit einem Kodierer (CODEC_B2, CODEC_D,CODEC_H2,...) dieser Umsetzeinrichtung (GW1, GW2, GW3) kompatibel ist.

6. Verfahren nach Anspruch 5,
**dadurch gekennzeichnet,**
**dass** die auf Kompatibilität prüfende Umsetzeinrichtung (GW1,GW2,GW3) eine Benachrichtigungsinformation (M) an eine weitere der Umsetzeinrichtungen (GW1,GW2,GW3) sendet, damit diese prüft, ob der erste Kodierer (CODEC_A, CODEC_B1, CODEC_C) mit einem Dekodierer (CODEC_B2,CODEC_D, CODEC_H2, ...) der weiteren Umsetzeinrichtung (GW1,GW2,GW3) und der erste Dekodierer (CODEC_J2,CODEC_K) mit einem Kodierer (CODEC_B2, CODEC_D, CODEC_H2, ...) der weiteren Umsetzeinrichtung (GW1,GW2,GW3) kompatibel ist.

7. Verfahren nach Anspruch 6,
**dadurch gekennzeichnet,**
**dass** die auf Kompatibilität prüfende Umsetzeinrichtung (GW1, GW2, GW3) die Benachrichtigungsinformation (M) nur sendet, wenn fehlende Kompatibilität feststellt wird.

8. Verfahren nach einem der Ansprüche 5 bis 7,
**dadurch gekennzeichnet,**
**dass** die Auswahl der Umsetzeinrichtung (GW1, GW2, GW3) durch die erfassende und prüfende Umsetzeinrichtung (GW1,GW2, GW3) vorgenommen wird.

9. Verfahren nach einem der Ansprüche 4 bis 8,
**dadurch gekennzeichnet,**
**dass** die Erfassung der Kodierungsangabe (A, B1, C) und/oder der Dekodierungsangabe (J2,K) anhand einer Signalisierungsmeldung (M), einer Konfiguration und/oder anhand einer Registrierung durchgeführt wird.

10. Verfahren nach einem der vorhergehenden Ansprüche,
**dadurch gekennzeichnet,**
**dass** die Nutzdaten über mehrere der Umsetzeinrichtungen (GW1, GW2, GW3) übertragen werden, wenn für alle geprüften Umsetzeinrichtungen (GW1, GW2, GW3) fehlende Kompatibilität festgestellt wird.

11. Server-Einrichtung (SE) zur Steuerung des Verfahrens nach einem der Ansprüche 1 bis 10 zum Übertragen von Nutzdaten von einer Ursprungs-Kommunikationseinrichtung (KE1) mit einem ersten Kodierer, der mehrere erste Codecs (CODEC_A, CODEC_B1, CODEC_C) aufweist, zum Kodieren der Nutzdaten zu einer Ziel-Kommunikationseinrichtung (KE2) mit einem ersten Dekodierer, der mehrere zweite Codecs (CODEC_J2, CODEC_K) aufweist, zum Dekodieren der Nutzdaten, wobei die Übertragung über ein Kommunikationsnetz (LAN) mit mehreren Umsetzeinrichtungen (GW1,GW2,GW3) erfolgt, die weitere Kodierer (CODEC_B2, CODEC_D, CODEC_H2,...) und Dekodierer (CODEC_B2, CODEC_D, CODEC_H2,...) aufweisen, mit
a) einer Prüfeinheit (PE) zum Prüfen auf Kompatibilität des ersten Kodierers (CODEC_A, CODEC_B1, CODEC_C) mit einem Dekodierer (CODEC_B2, CODEC_D, CODEC_H2,...) einer jeweiligen der sich im Signalisierungspfad für einen Verbindungsaufbau zwischen der Ursprungs-Kommunikationseinrichtung (KE1) und der Ziel-Kommunikationseinrichtung (KE2) befindenden Umsetzeinrichtungen (GW1,GW2,GW3) und Kompatibilität des ersten Dekodierers (CODEC_J2, CODEC_K) mit einem Kodierer (CODEC_B2, CODEC_D, CODEC_H2, ...) dieser jeweiligen Umsetzeinrichtung (GW1, GW2, GW3),
b) einer Umsetzeinrichtung-Auswahleinheit (UA) zum Auswählen einer derjenigen Umsetzeinrichtungen (GW1, GW2, GW3), bei denen die Prüfung Kompatibilität feststellt, aus den Umsetzeinrichtungen (GW1,GW2,GW3) zur Übertragung der Nutzdaten, und
c) einer Kodierer/Dekodierer-Auswahleinheit (CA) zum Auswählen eines mit dem ersten Kodierer (CODEC_A, CODEC_B1, CODEC_C) kompatiblen Dekodierers (CODEC_B2, CODEC_D, CODEC_H2,...) der ausgewählten Umsetzeinrichtung (GW1, GW2,GW3) und eines mit dem ersten Dekodierer (CODEC_J2, CODEC_K) kompatiblen Kodierers (CODEC_B2, CODEC_D, CODEC_H2,...) der ausgewählten Umsetzeinrichtung (GW1, GW2,GW3) für die Dekodierung der mit dem ersten Kodierer (CODEC_A, CODEC_B1, CODEC_C) kodierten Nutzdaten und für die Kodierung der mit dem ersten Dekodierer (CODEC_J2, CODEC_K) dekodierbaren Nutzdaten, wobei,
d) im Rahmen der Auswahl der Umsetzeinrichtung (GW1, GW2, GW3) ein Bewerten des ersten Kodierers CODEC_A, CODEC_B1, CODEC_C), des ersten Dekodierers (CODEC_J2, CODEC_K), der weiteren Kodierer (CODEC_B2, CODEC_D, CODEC_H2,...) und/oder der weiteren Dekodierer (CODEC_B2, CODEC_D, CODEC_H2,...) durchgeführt wird, wobei
e) eine Kombination von Umsetzeinrichtung (GW1, GW2, GW3), Kodierer (CODEC_B2, CODEC_D, CODEC_H2,...) dieser Umsetzeinrichtung (GW1, GW2, GW3), Dekodierer (CODEC_B2, CODEC_D, CODEC_H2,...) dieser Umsetzeinrichtung (GW1, GW2, GW3), Kodierer (CODEC_A, CODEC_B1, CODEC_C) der Ursprungs-Kommunikationseinrichtung (KE1) und/oder Dekodierer (CODEC_J2, CODEC_K) der Ziel-Kommunikationseinrichtung (KE2) derart ausgewählt wird,
e1) dass eine Bewertungsfunktion ausgeführt wird abhängig von mindestens einem der folgenden Merkmale:
i) einer Dienstqualität an der Ursprungs-Kommunikationseinrichtung (KE1),
ii) einer Dienstqualität an der Ziel-Kommunikationseinrichtung (KE2),
iii)einer Bandbreite jeweiliger Teilverbindungen (NV_C,NV_J,NV_B,NV_K) im Rahmen der Nutzdatenübertragung,
iv) einer zur Verfügung stehenden Bandbreite der jeweiligen Teilverbindungen (NV_C,NV_J,NV_B,NV_K),
v) einer Hierarchie der Umsetzeinrichtungen (GW1, GW2,GW3), wobei die Präferenz auf derjenigen Umsetzeinrichtung (GW2) liegt, die direkt an die Ziel-Kommunikationseinrichtung (KE2) gekoppelt ist, und
e2) dass die Bewertungsfunktion unter Verwendung von mindestens einem der vorgenannten Merkmale i) bis v) optimiert wird.

12. Umsetzeinrichtung (GW) zum Übertragen von Nutzdaten von einer Ursprungs-Kommunikationseinrichtung (KE1) mit einem ersten Kodierer, der mehrere erste Codecs (CODEC_A,CODEC_B1,CODEC_C) aufweist, zum Kodieren der Nutzdaten zu einer Ziel-Kommunikationseinrichtung (KE2) mit einem ersten Dekodierer, der mehrere zweite Codecs (CODEC_J2,CODEC_K) aufweist, zum
Dekodieren der Nutzdaten,
mit
a) einer Kodier/Dekodier-Ermittlungseinheit (CE) zum Erfassen einer den ersten Kodierer (CODEC_A,CODEC_B1,CODEC_C) spezifizierenden Kodierungsangabe (A,B1,C) und einer den ersten Dekodierer (CODEC_J2,CODEC_K) spezifizierenden Dekodierungsangabe (J2,K),
b) einer Empfangseinheit (EE)
- zum Empfangen einer Initiierungsmeldung (M) von einer weiteren Umsetzeinrichtung (GW1,GW2,GW3) und/oder zum Empfangen einer Signalisierungsmeldung (M) von der Ursprungs-Kommunikationseinrichtung (KE1) und
- zum Ansteuern einer Prüfeinrichtung (PEG) bei Empfang der Initiierungsmeldung (M) und/oder der Signalisierungsmeldung (M),
c) einer Sendeeinheit (SEN) zum Absenden einer Initiierungsmeldung (M) an eine weitere Umsetzeinrichtung (GW1, GW2, GW3),
d) der Prüfeinrichtung (PEG) zum Prüfen, ob der erste Kodierer (CODEC_A,CODEC_B1,CODEC_C) mit einem Dekodierer der Umsetzeinrichtung (GW) und der erste Dekodierer (CODEC_J2, CODEC_K) mit einem Kodierer der Umsetzeinrichtung (GW) kompatibel ist, anhand der erfassten Kodierungs- (A,B1,C) und Dekodierungsangabe (J2,K), wobei die Prüfung durchgeführt wird, wenn sich die Umsetzeinrichtung (GW) im Signalisierungspfad für einen Verbindungsaufbau zwischen der Ursprungs-Kommunikationseinrichtung (KE1) und der Ziel-Kommunikationseinrichtung (KE2) befindet,
e) einer Übertragungseinheit (ÜE) zum Übertragen der Nutzdaten von der Ursprung- (KE1) zu der Ziel-Kommunikationseinrichtung (KE2) bei positivem Prüfergebnis, wobei in der Übertragungseinheit (ÜE) die mit dem ersten Kodierer (CODEC_A, CODEC_B1, CODEC_C) kodierten Nutzdaten mit einem kompatiblen Dekodierer der Umsetzeinrichtung (GW) dekodiert und die mit dem ersten Dekodierer (CODEC_J2, CODEC_K) dekodierbaren Nutzdaten mit einem kompatiblen Kodierer der Umsetzeinrichtung (GW) kodiert werden,
wobei,
f) im Rahmen der Auswahl in der Umsetzeinrichtung (GW) ein Bewerten des ersten Kodierers (CODEC_A,CODEC_B1, CODEC_C), des ersten Dekodierers (CODEC_J2, CODEC_K), der weiteren Kodierer (CODEC_B2, CODEC_D, CODEC_H2, ...) und/oder der weiteren Dekodierer (CODEC_B2, CODEC_D, CODEC_H2,...) durchgeführt wird, wobei
g) eine Kombination von einer weiteren Umsetzeinrichtung (GW1,GW2,GW3), Kodierer (CODEC_B2,CODEC_D,CODEC_H2,...) dieser Umsetzeinrichtung (GW), Dekodierer (CODEC_B2, CODEC_D,CODEC_H2, ...) dieser Umsetzeinrichtung (GW), Kodierer (CODEC_A, CODEC_B1, CODEC_C) der Ursprungs-Kommunikationseinrichtung (KE1) und/oder Dekodierer (CODEC_J2, CODEC_K) der Ziel-Kommunikationseinrichtung (KE2) derart ausgewählt wird,
g1) dass eine Bewertungsfunktion ausgeführt wird abhängig von mindestens einem der folgenden Merkmale:
i) einer Dienstqualität an der Ursprungs-Kommunikationseinrichtung (KE1),
ii) einer Dienstqualität an der Ziel-Kommunikationseinrichtung (KE2),
iii) einer Bandbreite jeweiliger Teilverbindungen (NV_C,NV_J,NV_B,NV_K) im Rahmen der Nutzdatenübertragung,
iv) einer zur Verfügung stehenden Bandbreite der jeweiligen Teilverbindungen (NV_C,NV_J,NV_B,NV_K),
v) einer Hierarchie der weiteren Umsetzeinrichtungen (GW1, GW3), wobei die Präferenz auf derjenigen Umsetzeinrichtung (GW2) liegt, die direkt an die Ziel-Kommunikationseinrichtung (KE2) gekoppelt ist, und
g2) dass die Bewertungsfunktion unter Verwendung von mindestens einem der vorgenannten Merkmale i) bis v) optimiert wird.

## Claims

1. Method for transmitting user data from a source communications device (KE1) with a first encoder having several first codecs (CODEC_A, CODEC_B1, CODEC_C) for encoding the user data to a target communications device (KE2) with a first decoder having several second codecs (CODEC_J2, CODEC_K) for decoding the user data, wherein the transmission is effected via a communications network (LAN) with several converting devices (GW1, GW2, GW3) having further encoders and decoders (CODEC_B2, CODEC_D, CODEC_H2, ...), wherein,
a) for at least one of the converting devices (GW1, GW2, GW3) located in the signalling path for establishing a connection between the source communications device (KE1) and the target communications device (KE2), a check is made whether the first encoder (CODEC_A, CODEC_B1, CODEC_C) is compatible with a decoder (CODEC_B2, CODEC_D, CODEC_H2, ...) of this converting device (GW1, GW2, GW3) and the first decoder (CODEC_J2, CODEC_K) is compatible with an encoder (CODEC_B2, CODEC_D, CODEC_H2, ...) of this converting device (GW1, GW2, GW3),
b) for the transmission of the user data, one of those converting devices (GW1, GW2, GW3), for which the check ascertains compatibility, is selected from the converting devices (GW1, GW2, GW3), wherein
the selected converting device (GW1, GW2, GW3) decodes the user data encoded with the first encoder (CODEC_A, CODEC_B1, CODEC_C) with the compatible decoder (CODEC_B2, CODEC_D, CODEC_H2, ...) of the selected converting device (GW1, GW2, GW3) and encodes the user data decodable with the first decoder (CODEC_J2, CODEC_K) with the compatible encoder (CODEC_B2, CODEC_D, CODEC_H2, ...) of the selected converting device (GW1, GW2, GW3), wherein,
c) in the context of selecting the converting device (GW1, GW2, GW3), an assessment of the first encoder (CODEC_A, CODEC_B1, CODEC_C), of the first decoder (CODEC_J2, CODEC_K), of the further encoders (CODEC_B2, CODEC_D, CODEC_H2, ...) and/or of the further decoders (CODEC_B2, CODEC_D, CODEC_H2, ...) is performed, wherein
d) a combination of converting device (GW1, GW2, GW3), encoder (CODEC_B2, CODEC_D, CODEC_H2, ...) of this converting device (GW1, GW2, GW3), decoder (CODEC_B2, CODEC_D, CODEC_H2, ...) of this converting device (GW1, GW2, GW3), encoder (CODEC_A, CODEC_B1, CODEC_C) of the source communications device (KE1) and/or decoder (CODEC_J2, CODEC_K) of the target communications device (KE2) is selected such,
d1) that an assessment function is performed depending on at least one of the following features:
i) a service quality at the source communications device (KE1),
ii) a service quality at the target communications device (KE2),
iii) a bandwidth of respective part connections (NV_C, NV_J, NV_B, NV_K) in the context of the user data transmission,
iv) an available bandwidth of the respective part connections (NV_C, NV_J, NV_B, NV_K),
v) a hierarchy of the converting devices (GW1, GW2, GW3), wherein the preference is for the converting device (GW2) directly coupled to the target communications device (KE2), and
d2) that the assessment function is optimised using at least one of the features i) to v).

2. Method according to claim 1,
**characterised in**
**that** a signalling (SIG) between the source (KE1) and the target communications device (KE2) is performed via the converting devices (GW1, GW2, GW3) and
the user data is transmitted by bypassing one of the non-selected of these converting devices (GW1, GW2, GW3).

3. Method according to any one of the preceding claims,
**characterised in**
**that** the user data is exclusively transmitted via the selected converting device (GW1, GW2, GW3) by bypassing the non-selected converting devices (GW1, GW2, GW3).

4. Method according to any one of the preceding claims,
**characterised in**
**that**, in the context of the check for compatibility, an encoding detail (A, B1, C) specifying the first encoder (CODEC_A, CODEC_B1, CODEC_C), a decoding detail (J2, K) specifying the first decoder (CODEC_J2, CODEC_K), a converter encoding detail (B2, D, H2, ...) specifying the encoder or the encoders (CODEC_B2, CODEC_D, CODEC_H2, ... ) of the respective converting device (GW1, GW2, GW3) to be checked and/or a converter decoding detail (B2, D, H2, ...) specifying the decoder or the decoders (CODEC_B2, CODEC_D, CODEC_H2, ...) of the same converting device (GW1, GW2, GW3), are captured.

5. Method according to claim 4,
**characterised in**
**that** one of the converting devices (GW1, GW2, GW3) captures the encoding detail (A, B1, C) and the decoding detail (J2, K) and checks, using the captured coding detail (A, B1, C) and the captured decoding detail (J2, K), whether the first encoder (CODEC_A, CODEC_B1, CODEC_C) is compatible with a decoder (CODEC_B2, CODEC_D, CODEC_H2, ...) of this converting device (GW1, GW2, GW3) and the first decoder (CODEC_J2, CODEC_K) is compatibel with an encoder (CODEC_B2, CODEC_D, CODEC_H2, ...) of this converting device (GW1, GW2, GW3).

6. Method according to claim 5,
**characterised in**
**that** the converting device (GW1, GW2, GW3) checking for compatibility sends a confirmation information (M) to a further one of the converting devices (GW1, GW2, GW3) so that it checks whether the first encoder (CODEC_A, CODEC_B1, CODEC_C) is compatible with a decoder (CODEC_B2, CODEC_D, CODEC_H2, ...) of the further converting device (GW1, GW2, GW3) and the first decoder (CODEC_J2, CODEC_K) is compatible with an encoder (CODEC_B2, CODEC_D, CODEC_H2, ...) of the further converting device (GW1, GW2, GW3).

7. Method according to claim 6,
**characterised in**
**that** the converting device (GW1, GW2, GW3) checking for compatibility sends the notification information (M) only if missing compatibility is ascertained.

8. Method according to any one of the claims 5 to 7,
**characterised in**
**that** the converting device (GW1, GW2, GW3) is selected by the capturing and checking converting device (GW1, GW2, GW3).

9. Method according to any one of the claims 4 to 8,
**characterised in**
**that** the encoding detail (A, B1, C) and/or the decoding detail (J2, K) is/are captured using a signalling message (M), a configuration and/or by means of a registration.

10. Method according to any one of the preceding claims,
**characterised in**
**that** the user data is transmitted via several of the converting devices (GW1, GW2, GW3) if missing compatibility is ascertained for all checked converting devices (GW1, GW2, GW3).

11. Server facility (SE) for controlling of the method according to one of the claims 1 to 10 for transmitting user data from a source communications device (KE1) with a first encoder having several first codecs (CODEC_A, CODEC_B1, CODEC_C) for encoding the user data to a target communications device (KE2) with a first decoder having several second codecs (CODEC_J2, CODEC_K) for decoding the user data, wherein the transmission is effected via a communications network (LAN) with several converting devices (GW1, GW2, GW3) having the further encoders (CODEC_B2, CODEC_D, CODEC_H2, ...) and decoders (CODEC_B2, CODEC_D, CODEC_H2, ...), with
a) a checking unit (FE) for checking the compatibility of the first encoder (CODEC_A, CODEC_B1, CODEC_C) with a decoder (CODEC_B2, CODEC_D, CODEC_H2, ...) of a respective one of converting devices (GW1, GW2, GW3) located in the signalling path for establishing a connection between the source communications device (KE1) and the target communications device (KE2) and compatibility of the first decoder (CODEC_J2, CODEC_K) with an encoder (CODEC_B2, CODEC_D, CODEC_H2, ...) of this respective converting device (GW1, GW2, GW3),
b) a converting device selection unit (UA) for selecting one of those converting devices (GW1, GW2, GW3) for which the check ascertains compatibility, from the converting devices (GW1, GW2, GW3) for transmitting the user data, and
c) an encoder/decoder selection unit (CA) for selecting a decoder (CODEC_B2, CODEC_D, CODEC_H2, ...), of the selected converting device (GW1, GW2, GW3), compatible with the first encoder (CODEC_A, CODEC_B1, CODEC_C) and an encoder (CODEC_B2, CODEC_D, CODEC_H2, ...), of the selected converting device (GW1, GW2, GW3), compatible with the first decoder (CODEC_J2, CODEC_K) for the decoding of the user data encoded with the first encoder (CODEC_A, CODEC_B1, CODEC_C) and for the encoding of the user data decodable with the first decoder (CODEC_J2, CODEC_K),
wherein,
d) in the context of selecting the converting device (GW1, GW2, GW3), an assessment of the first encoder (CODEC_A, CODEC_B1, CODEC_C), of the first decoder (CODEC_J2, CODEC_K), of the further encoders (CODEC_B2, CODEC_D, CODEC_H2, ...) and/or of the further decoders (CODEC_B2, CODEC_D, CODEC_H2, ...) is performed, wherein
e) a combination of converting device (GW1, GW2, GW3), encoder (CODEC_B2, CODEC_D, CODEC_H2, ...) of this converting device (GW1, GW2, GW3), decoder (CODEC_B2, CODEC_D, CODEC_H2, ...) of this converting device (GW1, GW2, GW3), encoder (CODEC_A, CODEC_B1, CODEC_C) of the source communications device (KE1) and/or decoder (CODEC_J2, CODEC_K) of the target communications device (KE2) is selected such
e1) that an assessment function is performed depending on at least one of the following features:
i) a service quality at the source communications device (KE1),
ii) a service quality at the target communications device (KE2),
iii) a bandwidth of respective part connections (NV_C, NV_J, NV_B, NV_K) in the context of the user data transmission,
iv) an available bandwidth of the respective part connections (NV_C, NV_J, NV_B, NV_K),
v) a hierarchy of the converting devices (GW1, GW2, GW3), wherein the preference is for the converting device (GW2) directly coupled to the target communications device (KE2), and
e2) that the assessment function is optimised using at least one of the above-mentioned features i) to v).

12. Converting device (GW) for transmitting user data from a source communications device (KE1) with a first encoder which has several first codecs (CODEC_A, CODEC_B1, CODEC_C) for coding the user data to a target communications device (KE2) with a first decoder having several second codecs (CODEC_J2, CODEC_K) for decoding the user data,
with
a) an encoding/decoding detection unit (CE) for capturing an encoding detail (A, B1, C) specifying the first encoder (CODEC_A, CODEC_B1, CODEC_C) and a decoding detail (J2, K) specifying the first decoder (CODEC_J2, CODEC_K),
b) a reception unit (EE)
- for receiving an initiation message (M) from a further converting device (GW1, GW2, GW3) and/or for receiving a signalling message (M) from the source communications device (KE1) and
- for selecting a checking facility (PEG) when receiving the initiation message (M) and/or the signalling message (M),
c) a transmission unit (SEN) for sending an initiation message (M) to a further converting device (GW1, GW2, GW3),
d) the checking facility (PEG) for checking whether the first encoder (CODEC_A, CODEC_B1, CODEC_C) is compatible with a decoder of the converting device (GW) and the first decoder (CODEC_J2, CODEC_K) is compatible with an encoder of the converting device (GW), using the encoding detail (A, B1, C) and decoding detail (J2, K), wherein the check is performed if the converting device (GW) is located in the signalling path for establishing a connection between the source communications device (KE1) and the target communications device (KE2),
e) a transmission unit (ÜE) for transmitting the user data from the source (KE1) to the target communications device (KE2) in case of a positive check result wherein, in the transmission unit (ÜE), the user data encoded with the first encoder (CODEC_A, CODEC_B1, CODEC_C) is decoded with a compatible decoder of the converting device (GW) and the user data decodable with the first decoder (CODEC_J2, CODEC_K) is encoded with a compatible encoder of the converting device (GW),
wherein,
f) in the context of selecting the converting device (GW), an assessment of the first encoder (CODEC_A, CODEC_B1, CODEC_C), of the first decoder (CODEC_J2, CODEC_K), of the further encoders (CODEC_B2, CODEC_D, CODEC_H2, ...) and/or of the further decoders (CODEC_B2, CODEC_D, CODEC_H2, ...) is performed, wherein
g) a combination is selected from a further converting device (GW1, GW2, GW3), encoder (CODEC_B2, CODEC_D, CODEC_H2, ...) of this converting device (GW), decoder (CODEC_B2, CODEC_D, CODEC_H2, ...) of this converting device (GW), encoder (CODEC_A, CODEC_B1, CODEC_C) of the source communications device (KE1) and/or decoder (CODEC_J2, CODEC_K) of the target communications device (KE2) such
g1) that an assessment function is performed depending on at least one of the following features:
i) a service quality at the source communications device (KE1),
ii) a service quality at the target communications device (KE2),
iii) a bandwidth of respective part connections (NV_C, NV_J, NV_B, NV_K) in the context of the user data transmission,
iv) an available bandwidth of the respective part connections (NV_C, NV_J, NV_B, NV_J),
v) a hierarchy of the further converting devices (GW1, GW3), wherein the preference is for the converting device (GW2) directly coupled to the target communications device (KE2), and
g2) that the assessment function is optimised using at least one of the above-mentioned features i) to v).

## Revendications

1. Procédé servant à transmettre des données utiles d'un système de communication d'origine (KE1) équipé d'un premier encodeur, qui présente des premiers codecs (CODEC_A, CODEC_B1, CODEC_C), servant à encoder les données utiles vers un système de communication de destination (KE2), comportant
un premier encodeur, qui présente plusieurs deuxièmes codecs (CODEC_J2, CODEC_K), servant à décoder les données utiles, sachant que la transmission a lieu par l'intermédiaire d'un réseau de communication (LAN) équipé de plusieurs systèmes de conversion (GW1, GW2, GW3), qui présentent d'autres encodeurs et décodeurs (CODEC_B2, CODEC_D, CODEC_H2, ...), sachant que
a) pour au moins un des systèmes de conversion (GW1, GW2, GW3) se trouvant sur le trajet de signalisation pour l'établissement d'une liaison entre le système de communication d'origine (KE1) et le système de communication de destination (KE2), on vérifie respectivement si le premier encodeur (CODEC_A, CODEC_B1, CODEC_C) est compatible avec un décodeur (CODEC_B2, CODEC_D, CODEC_H2, ...) dudit système de conversion (GW1, GW2, GW3) et si le premier décodeur (CODEC_J2, CODEC_K) est compatible avec l'encodeur (CODEC_B2, CODEC_D, CODEC_H2, ...) dudit système de conversion (GW1, GW2, GW3),
b) pour la transmission des données utiles, on sélectionne un système de conversion (GW1, GW2, GW3) parmi les systèmes de conversion (GW1, GW2, GW3), pour lesquels la vérification a confirmé la compatibilité, sachant que
le système de conversion sélectionné (GW1, GW2, GW3) décode les données utiles codées avec le premier encodeur (CODEC_A, CODEC_B1, CODEC_C) avec le décodeur (CODEC_B2, CODEC_D, CODEC_H2, ...) compatible du système de conversion (GW1, GW2, GW3) sélectionné et encode les données utiles pouvant être décodées avec le premier décodeur (CODEC_J2, CODEC_K) avec l'encodeur (CODEC_B2, CODEC_D, CODEC_H2, ...) compatible du système de conversion (GW1, GW2, GW3) sélectionné,
sachant que
c) dans le cadre de la sélection du système de conversion (GW1, GW2, GW3), on procède à l'évaluation du premier encodeur (CODEC_A, CODEC_B1, CODEC_C), du premier décodeur (CODEC_J2, CODEC_K), des autres encodeurs (CODEC_B2, CODEC_D, CODEC_H2, ...) et/ou des autres décodeurs (CODEC_B2, CODEC_D, CODEC_H2, ...), sachant que
d) une combinaison d'un système de conversion (GW1, GW2, GW3), d'un encodeur (CODEC_B2, CODEC_D, CODEC_H2, ...) dudit système de conversion (GW1, GW2, GW3), d'un décodeur (CODEC_B2, CODEC_D, CODEC_H2, ...) dudit système de conversion (GW1, GW2, GW3), d'un encodeur (CODEC_A, CODEC_B1, CODEC_C) du système de communication d'origine (KE1) et/ou d'un décodeur (CODEC_J2, CODEC_K) du système de communication de destination (KE2) est choisie de telle manière
d1) qu'on exécute à une fonction d'évaluation en fonction au moins d'une des caractéristiques suivantes :
- i) une qualité de service au niveau du système de communication d'origine (KE1),
- ii) une qualité de service au niveau du système de communication de destination (KE2),
- iii) une bande passante de chacune des liaisons partielles (NV_C, NV_J, NV_B, NV_K) dans le cadre de la transmission de données utiles,
- iv) une bande passante disponible de chacune des liaisons partielles (NV_C, NV_J, NV_B, NV_K),
- v) une hiérarchie des systèmes de conversion (GW1, GW2, GW3), sachant que la préférence va à ce système de conversion (GW2), qui est couplé directement au système de communication de destination (KE2), et
d2) qu'on optimise la fonction d'évaluation en utilisant au moins une des caractéristiques i) à v).

2. Procédé selon la revendication 1,
**caractérisé en ce**
**qu'**on procède à une signalisation (SIG) entre le système de communication d'origine (KE1) et le système de communication de destination (KE2) par l'intermédiaire des systèmes de conversion (GW1, GW2, GW3),
et en ce que
les données utiles sont transmises en contournant l'un des systèmes de conversion (GW1, GW2, GW3) non sélectionnés.

3. Procédé selon l'une quelconque des revendications précédentes,
**caractérisé en ce**
**que** les données utiles sont transmises exclusivement par l'intermédiaire du système de conversion (GW1, GW2, GW3) sélectionné en contournant les systèmes de conversion (GW1, GW2, GW3) non sélectionnés.

4. Procédé selon l'une quelconque des revendications précédentes,
**caractérisé en ce**
**que** dans le cadre de la vérification de la compatibilité, on détecte des éléments de codage (A, B1, C) spécifiant le premier encodeur (CODEC_A, CODEC_B1, CODEC_C), des éléments de décodage (J2, K) spécifiant le premier décodeur (CODEC_J2, CODEC_K), des éléments d'encodage de convertisseur (B2, D, H2, ...) spécifiant l'encodeur ou les encodeurs (CODEC_B2, CODEC_D, CODEC_H2, ...) du système de conversion (GW1, GW2, GW3) respectif à vérifier et/ou des éléments de décodage de convertisseur (B2, D, H2, ...) spécifiant le décodeur ou les décodeurs (CODEC_B2, CODEC_D, CODEC_H2, ...) du même système de conversion (GW1, GW2, GW3).

5. Procédé selon la revendication 4,
**caractérisé en ce**
**qu'**un des systèmes de conversion (GW1, GW2, GW3) détecte les éléments de codage (A, B1, C) et les éléments de décodage (J2, K) et vérifie à l'aide des éléments de codage (A, B1, C) détectés et des éléments de décodage (J2, K) détectés si le premier encodeur (CODEC_A, CODEC_B1, CODEC_C) est compatible avec un décodeur (CODEC_B2, CODEC_D, CODEC_H2, ...) dudit système de conversion (GW1, GW2, GW3) et si le premier décodeur (CODEC_J2, CODEC_K) est compatible avec un encodeur (CODEC_B2, CODEC_D, CODEC_H2, ...) dudit système de conversion (GW1, GW2, GW3).

6. Procédé selon la revendication 5,
**caractérisé en ce**
**que** le système de conversion (GW1, GW2, GW3) vérifiant la compatibilité envoie une information de notification (M) à un autre des systèmes de conversion (GW1, GW2, GW3) afin que ce dernier vérifie si le premier encodeur (CODEC_A, CODEC_B1, CODEC_C) est compatible avec un décodeur (CODEC_B2, CODEC_D, CODEC_H2, ...) de l'autre système de conversion (GW1, GW2, GW3) et si le premier décodeur (CODEC_J2, CODEC_K) est compatible avec un premier encodeur (CODEC_B2, CODEC_D, CODEC_H2, ...) de l'autre système de conversion (GW1, GW2, GW3).

7. Procédé selon la revendication 6,
**caractérisé en ce**
**que** le système de conversion (GW1, GW2, GW3) vérifiant la compatibilité n'envoie une information de notification (M) que lorsqu'on constate un manque de compatibilité.

8. Procédé selon l'une quelconque des revendications 5 à 7,
**caractérisé en ce**
**que** le choix du système de conversion (GW1, GW2, GW3) est entrepris par le système de conversion (GW1, GW2, GW3) qui réalise la vérification et la détection.

9. Procédé selon l'une quelconque des revendications 4 à 8,
**caractérisé en ce**
**que** la détection des éléments d'encodage (A, B1, C) et/ou des éléments de décodage (J2, K) est réalisée à l'aide d'un message de signalisation (M), d'une configuration et/ou à l'aide d'un enregistrement.

10. Procédé selon l'une quelconque des revendications précédentes,
**caractérisé en ce**
**que** les données utiles sont transmises par l'intermédiaire de plusieurs des systèmes de conversion (GW1, GW2, GW3), lorsqu'un manque de compatibilité est constaté pour tous les systèmes de conversion (GW1, GW2, GW3) vérifiés.

11. Système de serveur (SE) servant à commander le procédé selon l'une quelconque des revendications 1 à 10 servant à transmettre des données utiles d'un système de communication d'origine (KE1) équipé d'un premier encodeur, qui présente plusieurs premiers codecs (CODEC_A, CODEC_B1, CODEC_C) servant en encoder des données utiles en direction d'un système de communication de destination (KE2) équipé d'un premier décodeur, qui présente plusieurs deuxièmes codecs (CODEC_J2, CODEC_K), servant à décoder les données utiles, sachant que la transmission se fait par l'intermédiaire d'un réseau de communication (LAN) équipé de plusieurs systèmes de conversion (GW1, GW2, GW3), lesquels présentent d'autres encodeurs (CODEC_B2, CODEC_D, CODEC_H2, ...) et décodeurs (CODEC_B2, CODEC_D, CODEC_H2, ...), comportant
a) une unité de vérification (PE) servant à vérifier la compatibilité du premier encodeur (CODEC_A, CODEC_B1, CODEC_C) avec un décodeur (CODEC_B2, CODEC_D, CODEC_H2, ...) d'un des systèmes de conversion (GW1, GW2, GW3) se trouvant sur le trajet de signalisation pour l'établissement d'une liaison entre le système de communication d'origine (KE1) et le système de communication de destination (KE2), et la compatibilité du premier décodeur (CODEC_J2, CODEC_K) avec un encodeur (CODEC_B2, CODEC_D, CODEC_H2, ...) dudit système de conversion (GW, GW2, GW3) respectif,
b) une unité de sélection de système de conversion (UA) servant à sélectionner un desdits systèmes de conversion (GW1, GW2, GW3), pour lesquels la vérification a constaté la compatibilité, parmi les systèmes de conversion (GW1, GW2, GW3) servant à transmettre les données utiles, et
c) une unité de sélection des encodeurs/décodeurs (CA) servant à sélectionner un décodeur (CODEC_B2, CODEC_D, CODEC_H2, ...) du système de conversion (GW1, GW2, GW3) sélectionné compatible avec le premier encodeur (CODEC_A, CODEC_B1, CODEC_C) et à sélectionner un encodeur (CODEC_B2, CODEC_D, CODEC_H2,...) du système de conversion (GW1, GW2, GW3) sélectionné, compatible avec le premier décodeur (CODEC_J2, CODEC_K) pour le décodage des données utiles codées avec le premier encodeur (CODEC_A, CODEC_B1, CODEC_C) et pour l'encodage des données utiles pouvant être décodées avec le premier décodeur (CODEC_J2, CODEC_K), sachant que
d) dans le cadre de la sélection du système de conversion (GW1, GW2, GW3), on procède à une évaluation du premier encodeur (CODEC_A, CODEC_B1, CODEC_C), du premier décodeur (CODEC_J2, CODEC_K), des autres encodeurs (CODEC_B2, CODEC_D, CODEC_H2, ...) et/ou des autres décodeurs (CODEC_B2, CODEC_D, CODEC_H2, ...), sachant que
e) une combinaison d'un système de conversion (GW1, GW2, GW3), d'un encodeur (CODEC_B2, CODEC_D, CODEC_H2, ...) dudit système de conversion (GW1, GW2, GW3), d'un décodeur (CODEC_B2, CODEC_D, CODEC_H2, ...) dudit système de conversion (GW1, GW2, GW3), d'un encodeur (CODEC_A, CODEC_B1, CODEC_C) du système de communication d'origine (KE1) et/ou d'un décodeur (CODEC_J2, CODEC_K) du système de communication de destination (KE2) est choisie de telle manière
e1) qu'on exécute une fonction d'évaluation en fonction au moins d'une des caractéristiques suivantes :
- i) une qualité de service au niveau du système de communication d'origine (KE1),
- ii) une qualité de service au niveau du système de communication de destination (KE2),
- iii) une bande passante de chaque liaison partielle (NV_C, NV_J, NV_B, NV_K) dans le cadre de la transmission de données utiles,
- iv) une bande passante disponible de chaque liaison partielle (NV_C, NV_J, NV_B, NV_K),
- v) une hiérarchie des systèmes de conversion (GW1, GW2, GW3), sachant que la préférence va au système de conversion (GW2) qui est couplé directement au système de communication de destination (KE2), et
e2) qu'on optimise la fonction d'évaluation en utilisant au moins une des caractéristiques évoquées ci-dessus i) à v).

12. Système de conversion (GW) servant à transmettre des données utiles d'un système de communication d'origine (KE1) équipé d'un premier encodeur, qui présente plusieurs premiers codecs (CODEC_A, CODEC_B1, CODEC_C), servant à encoder des données utiles en direction d'un système de communication de destination (KE2) équipé d'un premier décodeur, qui présente plusieurs deuxièmes codecs (CODEC_J2, CODEC_K), servant à
décoder des données utiles,
comportant
a) une unité de détermination de codeurs/décodeurs (CE) servant à détecter des éléments de codage (A, B1, C) spécifiant le premier encodeur (CODEC_A, CODEC_B1, CODEC_C) et des éléments de décodage (J2, K) spécifiant le premier décodeur (CODEC_J2, CODEC_K),
b) une unité réceptrice (EE)
- servant à recevoir un message d'initiation (M) d'un autre système de conversion (GW1, GW2, GW3) et/ou servant à recevoir un message de signalisation (M) du système de communication d'origine (KE1) et
- servant à commander un système de vérification (PEG) lors de la réception du message d'initiation (M) et/ou du message de signalisation (M),
c) une unité émettrice (SEN) servant à envoyer un message d'initiation (M) à un autre système de conversion (GW1, GW2, GW3),
d) un système de vérification (PEG) servant à vérifier à l'aide des éléments d'encodage (A, B1, C) et de décodage (J2, K) détectés si le premier encodeur (CODEC_A, CODEC_B1, CODEC_C) est compatible avec un décodeur du système de conversion (GW) et si le premier décodeur (CODEC_J2, CODEC_K) est compatible avec un encodeur du système de conversion (GW), sachant qu'on procède à la vérification si le système de conversion (GW) se trouve dans le trajet de signalisation pour l'établissement d'une liaison entre le système de communication d'origine (KE1) et le système de communication de destination (KE2),
e) une unité de transmission (ÜE) servant à transmettre les données utiles du système de communication d'origine (KE1) au système de communication de destination (KE2) dans le cas où la vérification présente un résultat positif, sachant que dans l'unité de transmission (ÜE), les données utiles encodées avec le premier encodeur (CODEC_A, CODEC_B1, CODEC_C) sont décodées avec un décodeur compatible du système de conversion (GW) et que les données utiles pouvant être décodées avec le premier décodeur (CODEC_J2, CODEC_K) sont codées avec un encodeur compatible du système de conversion (GW),
sachant que
f) dans le cadre de la sélection du système de conversion (GW), on procède à une évaluation du premier encodeur (CODEC_A, CODEC_B1, CODEC_C), du premier décodeur (CODEC_J2, CODEC_K), des autres encodeurs (COOEC_B2, CODEC_D, CODEC_H2, ...) et/ou des autres décodeurs (CODEC_B2, CODEC_D, CODEC_H2, ...), sachant que
g) une combinaison d'un autre système de conversion (GW1, GW2, GW3), d'un encodeur (CODEC_B2, CODEC_D, CODEC_H2, ...) dudit système de conversion (GW), d'un décodeur (CODEC_B2, CODEC_D, CODEC_H2, ...) dudit système de conversion (GW), d'un encodeur (CODEC_A, CODEC_B1, CODEC_C) du système de communication d'origine (KE1) et/ou d'un décodeur (CODEC_J2, CODEC_K) du système de communication de destination (KE2) est sélectionnée de telle manière
g1) on exécute une fonction d'évaluation en fonction d'au moins une des caractéristiques suivantes :
- i) une qualité de service au niveau du système de communication d'origine (KE1),
- ii) une qualité de service au niveau du système de communication de destination (KE2),
- iii) une bande passante de chaque liaison partielle (NV_C, NV_J, NV_B, NV_K) dans le cadre de la transmission de données utiles,
- iv) une bande passante disponible pour chaque liaison partielle (NV_C, NV_J, NV_B, NV_K),
- v) une hiérarchie des autres systèmes de conversion (GW1, GW3), sachant que la préférence va au système de conversion (GW2) qui est couplé directement au système de communication de destination (KE2), et
g2) on optimise la fonction d'évaluation en utilisant au moins une des caractéristiques évoquées ci-dessus i) à v).
